# EUROPÄISCHE PATENTSCHRIFT

(11) **EP 2 089 304 B1**
(45) Veröffentlichungstag und Bekanntmachung des Hinweises auf die Patenterteilung: **26.12.2012**
(21) Anmeldenummer: 07846857.6
(22) Anmeldetag: 27.11.2007
(51) Int. Cl.: B65H 54/58, B65H 54/62, B01D 63/02, B29C 63/06, B01D 69/08

(54) **VORRICHTUNG UND VERFAHREN ZUR HERSTELLUNG VON FASERBÜNDELN**
DEVICE AND METHOD FOR THE PRODUCTION OF FIBER STRANDS
DISPOSITIF ET PROCÉDÉ POUR LA PRODUCTION DE FAISCEAUX DE FIBRES

(30) Priorität: 04.12.2006 DE 102006057101
(43) Veröffentlichungstag der Anmeldung: 19.08.2009
(60) Teilanmeldung: 11008062.9
(73) Patentinhaber: Fresenius Medical Care Deutschland GmbH, 61352 Bad Homburg (DE)
(72) Erfinder: BARRA, Elmar, 66809 Nalbach (DE); REUSCHENBACH, Hermann, 80807 München (DE); HÖRMANN, Jörn, 66265 Heusweiler (DE)
(74) Vertreter: Laufhütte, Dieter
(86) Internationale Anmeldenummer: PCT/EP2007/010296
(87) Internationale Veröffentlichungsnummer: WO 2008/067934

(56) Entgegenhaltungen:
- EP-A- 0 116 155
- EP-A- 0 309 331
- EP-A- 1 031 526
- DE-A1- 19 806 293
- FR-A- 2 674 232
- FR-A- 2 768 950
- GB-A- 802 713
- GB-A- 1 277 513
- JP-A- 10 194 606
- JP-A- 57 184 065
- JP-A- 2005 178 979
- US-A- 2 559 314
- US-A- 4 276 687
- US-A- 5 449 430
- US-A1- 2006 231 193

## Beschreibung

Die vorliegende Erfindung betrifft Vorrichtungen und Verfahren zur Herstellung von Faserbündeln, insbesondere von Hohlfasermembranbündeln, insbesondere für die Herstellung von Dialysefiltern.

Haupteinsatzgebiet solcher Faserbündel ist die Herstellung von Dialysefiltern, d.h. von Filtern für extrakorporale Blutbehandlungsverfahren, zum Beispiel für die Hämodialyse, die Hämofiltration und die Hämodiafiltration. Nach dem Stand der Technik werden Fasern für solche Filter durch kontinuierlich arbeitende Hohlfaserspinnanlagen hergestellt. Die kontinuierlich aus der Hohlfaserspinnanlage austretenden Hohlfasern werden meist chargenweise zum Beispiel auf langsam rotierende Haspelräder aufgewickelt. Die Haspelräder verfügen über gleichmäßig auf Umfang verteilte Wickeldorne, auf denen die Hohlfasern aufliegen. Dadurch werden die Hohlfasern zwischen den Wickeldornen frei gespannt. Die Abstände zwischen den Wickeldornen sind so gewählt, daß zwischen jeweils zwei Wickeldornen ein oder zwei Hohlfaserbündel entstehen. Diese Hohlfaserbündel werden in Handarbeit mit einer dünnen Wickelfolie aus Kunststoff umwickelt und manuell fixiert. Sobald das Hohlfaserbündel auf diese Weise fixiert ist, wird es wiederum in Handarbeit mit einem Schneidgerät auf die gewünschte Länge abgeschnitten. Schließlich wird das Hohlfaserbündel in eine zylindrische Filterkartusche eingeführt und die Wickelfolie aus Kunststoff wieder entfernt. Derartige Herstellverfahren sind beispielsweise aus USA 4,276,687 bekannt.

Die Herstellung eines Langfaserbündels, welches nach dem Aufhaspeln und Umwickeln in mehrere Einzelbündel geschnitten wird, ist aus JP 10-194606 A bekannt. Dabei wird die Membranfaser auf ein Aufnahmerad oder Haspelrad aufgewickelt, dessen Umfang einem Vielfachen der Länge eines fertigen Hohlfaserbündels entspricht. Sobald die gewünschte Anzahl an Hohlfasern aufgewickelt ist, wird der komplette Hohlfaserstrang an einer Stelle durchgeschnitten und vom Aufnahmerad bzw. Haspelrad abgezogen, so daß ein linearer Hohlfaserstrang vorliegt, der nunmehr mit einem Fixierband spiralförmig umwickelt und danach auf die gewünschte Länge der Einzelbündel geschnitten wird. Um einen quasi kontinuierlichen Betrieb zu realisieren, werden zwei ortsfeste Aufnahmeräder parallel betrieben. Die wechselnde Übergabe der Hohlfaser auf das eine bzw. das andere Aufnahmerad erfolgt durch eine bewegliche Hohlfaserzuführung. Dieses Verfahren hat allerdings den Nachteil, daß Zugkräfte auf den Hohlfaserstrang ausgeübt werden müssen und reibungsbehaftete Relativbewegung zwischen den äußeren Hohlfasern des Hohlfaserstrangs und den Führungselementen der Maschine auftreten. Außerdem ändert sich beim Abwickeln zwangsläufig auch die Lage der einzelnen Hohlfasern innerhalb eines Hohlfaserbündels, weil beim Aufwickeln der Umfang der einzelnen Umwicklung in radialer Richtung zunimmt. Außerdem ist die spiralförmige Umwicklung mit einem Fixierband technisch äußerst aufwendig und führt zu einer niedrigen Effektivität des Verfahrens.

Aus DE 198 06 293 A1 ist ein Verfahren zum Umwickeln eines Faserbündels bekannt, bei welchem das Faserbündel auf einer Folie in ein aufgebogenes Stahlblech gelegt wird, welches man daraufhin in seine entspannte Stellung zurückfedern läßt, in welcher es einen Zylinder bildet und so das Faserbündel mit der Folie umwickelt. Hierbei kann aber die auf das Faserbündel ausgeübte Kraft schlecht kontrolliert werden, da sie im wesentlichen von der Rückstellkraft des Stahlbleches abhängt, so daß die Genauigkeit der produzierten Faserbündel leidet.

GB 1 277 513 offenbart eine Aufhaspelvorrichtung, die einen Haspelträger aufweist. Ferner weist die Vorrichtung zwei Haspeln auf, die an dem Haspelträger drehbar gelagert sind. Die Haspeln sind derart angeordnet, dass deren Drehachsen die Hauptachse des Haspelträgers nicht schneiden. Des Weiteren sind die Haspeln derart angeordnet, dass der Abstand der Drehachsen der Haspeln von der Hauptachse des Haspelträgers größer ist als der Drehradius der Haspeln.

Aufgabe der vorliegenden Erfindung ist es deshalb, Vorrichtungen und Verfahren zur Herstellung von Faserbündeln zur Verfügung zu stellen, welche eine komplette Automatisierung, eine quasi kontinuierliche Herstellung sowie eine hohe Effektivität und Genauigkeit aufweisen.

Diese Aufgabe wird von einer Vorrichtung und einem Verfahren zum Aufhaspeln von Faserbündeln gemäß Ansprüchen 1 bzw. 12 erfüllt. Vorteilhafte Ausgestaltungen der Erfindung sind Gegenstand der Unteransprüche.

Die erfindungsgemäße Vorrichtung zum Aufhaspeln von Faserbündeln, insbesondere von Hohlfasermembranbündeln insbesondere für die Herstellung von Dialysefiltern, umfaßt dabei einen um eine Hauptachse drehbaren Haspelträger und mindestens zwei Haspeln, welche an dem Haspelträger drehbar gelagert sind. Dabei stehen die Drehachsen der Haspeln senkrecht auf der Hauptachse des Haspelträgers, d. h. jede der Haspel-Drehachsen verläuft für sich genommen jeweils in einer Ebene, welche orthogonal zur Hauptachse des Haspelträgers angeordnet ist.

Diese Anordnung hat den Vorteil, daß ein Hohlfaserstrang auf einer ersten Haspel aufgehaspelt werden kann, während bereits aufgehaspelte Faserbündel auf den übrigen Haspeln weiterverarbeitet werden können. Ist das Aufhaspeln auf der ersten Haspel beendet, wird der Haspelträger einen Schritt weiter gedreht, so daß die erste Haspel mit dem aufgehaspelten Faserbündel in einen Weiterverarbeitungsbereich hineingedreht wird, während eine neue leere Haspel in den Aufhaspelbereich gedreht wird. So können also die Vorrichtungen zum Bereitstellen des Faserstrangs wie zum Beispiel eine Spinnmaschine und Weiterverarbeitungsmaschinen wie z.B. eine Umwicklungsmaschine stationär angeordnet sein, während sich die Haspeln jeweils in ihren Bereich weiterdrehen. So muß der Faserstrang nicht hin und her bewegt werden, was eine schonendere Verarbeitung der Fasern erlaubt. Auch sind die einzelnen Haspeln sehr viel leichter zugänglich, was insbesondere die Weiterverarbeitung erleichtert. Dabei können die Faserbündel beim Umwickeln auf den Haspeln verbleiben. So ist eine effektive quasi kontinuierliche Verarbeitung des Faserstrangs möglich.

Daß die Drehachsen der Haspeln senkrecht auf der Hauptachse des Haspelträgers stehen, ermöglicht es, eine äußerst platzsparende Konstruktion aus Haspelträger und Haspeln zu verwenden, bei der der für die Drehung des Haspelträger mit den Haspeln freizuhaltende Bereich kleingehalten werden kann. Dies erhöht die Zugänglichkeit der erfindungsgemäßen Vorrichtung insbesondere für Weiterverarbeitungsschritte. Insbesondere kann der Haspelträger dabei im wesentlichen so lang sein wie der Durchmesser der Haspeln, während diese seitlich am Haspelträger angeordnet sind. Werden Haspeln mit mehr als zwei Zinken verwendet, sind damit nur zwei Haspeln auf jeweils gegenüberliegenden Seiten möglich, während bei der Verwendung von Zweizinkenhaspeln auch die Verwendung von mehr als zwei Haspeln möglich ist. In jedem Fall ergibt sich eine äußerst kompakte Konstruktion, bei welcher insbesondere auch die vom Haspelträger zu bewegenden Momente auch bei sehr großen Haspeln klein gehalten werden können.

Vorteilhafterweise bestehen die mindestens zwei Haspeln jeweils im wesentlichen aus einem Haspelbalken mit an den Enden des Haspelbalkens angeordneten Haspelköpfen mit Wickeldornen. Solche Zweizinkenhaspeln haben insbesondere in der vorliegenden Erfindung den großen Vorteil, daß sie während der Drehung des Haspelträgers parallel zu diesem angeordnet werden können und so nur einen minimalen Platzbedarf haben. Des weiteren kann das auf eine solche Zweizinkenhaspel aufgehaspelte Faserbündel direkt auf der Haspel weiterverarbeitet werden, wodurch der Übergabeschritt bzw. das Abnehmen des Faserbündels von der Haspel entfällt. Insbesondere ist es möglich, daß aufgehaspelte Linearfaserbündel sofort zu umwickeln.

Vorteilhafterweise beträgt der Abstand zwischen den Haspelköpfen-mindestens die dreifache Länge der mit den Hohlfasermembranbündeln hergestellten Filterabschnitte von Dialysefiltern. So lassen sich die Verschnittverluste mit der vorliegenden Erfindung ganz erheblich verringern. Diese Verschnittverluste liegen beim Stand der Technik bei ca. 10% und können durch die vorliegende Erfindung ca. halbiert werden. Vorteilhafterweise beträgt der Abstand zwischen den Haspelköpfen dabei mindestens die fünffache Länge und noch vorteilhafterweise mindestens die zehnfache Länge der mit den Hohlfasermembranbündeln hergestellten Filterabschnitte.

Vorteilhafterweise umfassen die Haspelköpfe Streck-/Staucheinrichtungen, mit welchen die Wickeldorne so bewegt werden können, daß das aufgehaspelte Faserbündel gestreckt und/oder gestaucht werden kann. Dies ermöglicht insbesondere eine Streckung beim Einformen sowie einer Zugspannungsentlastung des Faserbündels bei der Weiterverarbeitung. Durch diese Zugspannungsentlastung kann sichergestellt werden, daß die Faserbündel nach dem Schneiden auf ihre endgültige Länge nicht weiter schrumpfen.

Dabei verfahren die Streck-/Staucheinrichtungen die Wickeldorne vorteilhafterweise linear entlang der Hauptausdehnung des Haspelbalkens. So läßt sich ein einfaches Stauchen oder Strecken des aufgehaspelten Faserbündels bewerkstelligen.

Vorteilhafterweise sind bei der vorliegenden Erfindung zwei Haspeln vorgesehen, die an gegenüberliegenden Seiten des Haspelträgers angeordnet sind und deren Drehachsen insbesondere parallel oder vorteilhafterweise koaxial angeordnet sind.

So kann auf einer Seite der Vorrichtung auf der ersten Haspel ein Faserstrang aufgehaspelt werden, während auf der anderen Seite ein auf der zweiten Haspel bereits aufgehaspeltes Faserbündel weiterverarbeitet wird. Sind Aufhaspeln und Weiterverarbeitung abgeschlossen, dreht sich der Haspelträger um 180°, so daß das auf die erste Haspel aufgehaspelte Faserbündel weiterverarbeitet werden kann, während ein neues Faserbündel auf die zweite Haspel aufgehaspelt wird. Die Verwendung von nur zwei Haspeln ermöglicht eine hervorragende Zugänglichkeit der jeweiligen Haspeln und so insbesondere eine besonders einfache Weiterverarbeitung.

Vorteilhafterweise umfaßt die erfindungsgemäße Vorrichtung dabei für jede der Haspeln jeweils separat angesteuerte Antriebe zur Drehung der Haspeln. Dies ermöglicht die effektive Automatisierung des Verfahrens.

Weiterhin vorteilhafterweise umfaßt die Vorrichtung einen Antrieb zur Drehung des Haspelträgers um einen festen Winkelbereich, insbesondere um 180°. Bei der Verwendung von mehr als zwei Haspeln entspricht der Winkelbereich jeweils 360° geteilt durch die Anzahl der Haspeln.

Vorteilhafterweise sind die Antriebe zur Drehung der Haspeln an dem Haspelträger angeordnet. Dies ermöglicht eine einfache und kompakte Konstruktion der Vorrichtung.

Vorteilhafterweise wird der Haspelträger dabei von einer Trommel gebildet, in welcher zum Beispiel die Antriebe für die Haspeln sowie Steuerleitungen integriert werden können.

Weiterhin vorteilhafterweise umfassen die Haspeln jeweils Greifer zum Festhalten des Anfangs sowie des Endes eines Faserstranges. So kann zu Beginn des Aufhaspelvorgangs der Faserstrang an der Haspel fixiert werden. Vorteilhafterweise sind diese Greifer in der Nähe der Wickeldorne angeordnet, um so Schnittverluste am Anfang und am Ende des Faserstrangs gering zu halten. Ist nach einer bestimmten Anzahl von Umdrehungen der Haspel die vorbestimmte Dicke des Faserbündels erreicht, wird der Haspelvorgang beendet und das Ende des Faserstrangs wiederum an der Haspel fixiert, so daß der Faserstrang getrennt werden kann.

Vorteilhafterweise umfaßt die erfindungsgemäße Vorrichtung weiterhin einen Übergabegreifer zur Aufnahme eines Faserstrangs von einer der Haspeln und zur Übergabe des Faserstrangs an die nächste Haspel. Ist also das Aufhaspeln auf einer der Haspeln beendet, übernimmt der Übergabegreifer den Faserstrang und hält diesen so lange fest, bis die nächste Haspel in den Bereich des Übergabegreifers hineingedreht wurde und den Faserstrang übernehmen kann. Insbesondere ermöglicht dies einen quas-kontinuierlichen Betrieb.

Vorteilhafterweise umfaßt die erfindungsgemäße Vorrichtung weiterhin eine Schneidevorrichtung zum Abschneiden des Faserstrangs.

Vorteilhafterweise umfaßt die erfindungsgemäße Vorrichtung zum Aufhaspeln von Faserbündeln weiterhin eine Vorrichtung zur Bereitstellung eines Faserstrangs, insbesondere eine Spinnmaschine. Diese Vorrichtung stellt den Faserstrang, welcher auf die Haspeln aufgehaspelt wird, zur Verfügung. Üblicherweise wird es sich dabei um eine Spinnmaschine mit kontinuierlicher Herstellung von Hohlfasermembranfasern handeln.

Vorteilhafterweise umfaßt die erfindungsgemäße Vorrichtung weiterhin eine Vorrichtung zum Speichern und/oder Spannen des Faserstrangs, insbesondere eine Tänzeranordnung. Diese Vorrichtung ermöglicht es, die erfindungsgemäße Vorrichtung quasi-kontinuierlich zu betreiben. So können kurze Pausen im Haspelvorgang, welche entstehen, wenn z.B. durch Drehen des Haspelträgers eine neue Haspel in den Bereich der Spinnmaschine gedreht wird, überbrückt werden, indem der kontinuierlich zur Verfügung gestellte Faserstrang in der Vorrichtung zum Speichern des Faserstrangs gespeichert wird. Ebenso können so Schwankungen in der Aufhaspelgeschwindigkeit insbesondere bei der Verwendung von Zweizinkenhaspeln ausgeglichen werden. Ebenso kann diese Vorrichtung zum Herstellen einer gleichmäßigen Faserstrangspannung dienen. Eine Tänzeranordnung ist dabei eine besonders vorteilhafte Vorrichtung zum Speichern und/oder Spannen des Faserstranges.

Vorteilhafterweise ist die Tänzerrolle in einer solchen Tänzeranordnung dabei mit einer massearmen Zugkraftvorrichtung, insbesondere mit einem Drehmomentgesteuerten Servomotor ausgestattet. Dies hat im Vergleich mit Tänzeranordnungen mit einer gewichtsbelasteten Zugkraftvorrichtung den Vorteil, daß die Eigenfrequenz der Tänzeranordnung deutlich höher liegen kann und so Schwingungen weitgehend vermieden werden können.

Weiterhin vorteilhafterweise ist die Tänzerrolle feststellbar und mit Hilfe eines Servermotors verfahrbar, z. B. dann, wenn die Zugkraft auf den Faserstrang von einer Absaugvorrichtung aufgebracht wird, z. B. beim Anfahren der Anlage oder während einer Störung, wenn die Haspelvorrichtung nicht arbeitet.

Weiterhin vorteilhafterweise ist bei der erfindungsgemäßen Vorrichtung eine Fadenspannungsmeßeinrichtung vorgesehen. Über diese kann die Fadenspannung des Faserstrangs gemessen werden, was eine Regelung der Vorrichtung zum Spannen des Faserstrangs, insbesondere der Tänzeranordnung ermöglicht. So läßt sich eine konstante Fadenspannung des aufgehaspelten Faserstrangs einstellen.

Weiterhin vorteilhafterweise ist bei der erfindungsgemäßen Vorrichtung zum Aufhaspeln von Faserbündeln weiterhin eine Vorrichtung zur Weiterverarbeitung des aufgehaspelten Faserbündels, insbesondere eine Wickelmaschine vorgesehen. Hierdurch fallen Übergabevorgänge wie im Stand der Technik weg, so daß der Stofffluß nicht unterbrochen werden braucht. So ermöglicht die erfindungsgemäße Vorrichtung einen quasi-kontinuierlichen Betrieb. Insbesondere ermöglicht auch die erfindungsgemäße Zweizinkenhaspel ein besonders einfaches Umwickeln des aufgehaspelten Faserbündels, da die Zugänglichkeit erhöht wird. Die erfindungsgemäße Anordnung mit mindestens zwei Haspeln, deren Drehachsen senkrecht auf der Drehachse des Haspelträgers stehen, ermöglicht so, bei nur geringem Platzbedarf gleichzeitig auf einer Haspel aufzuhaspeln und auf den übrigen Haspeln weiter zu verarbeiten.

Vorteilhafterweise kann dabei die Vorrichtung zur Weiterverarbeitung des aufgehaspelten Faserbündels zur Aufnahme des Faserbündels zur Haspel hin bewegt werden. Zum Drehen des Haspelträgers wird die Vorrichtung zur Weiterverarbeitung von der Haspel wegbewegt, um für die Drehung Platz zu machen. Daraufhin wird eine neue Haspel in den Bereich der Weiterverarbeitung gedreht und die Vorrichtung zur Weiterverarbeitung wieder an die Haspel herangefahren. So kann zum Beispiel die Wickelmaschine vertikal bewegbar sein, so daß sie zum Drehen der Haspeln nach unten bewegt wird und so den Drehradius freigibt, während sie zur Aufnahme des Faserbündels nach oben zur Haspel hin bewegt werden kann.

Vorteilhafterweise sind bei der Vorrichtung zum Aufhaspeln von Faserbündeln der vorliegenden Erfindung eine Vorrichtung zur Bereitstellung eines Faserstrangs und eine Vorrichtung zur Weiterverarbeitung des aufgehaspelten Faserbündels vorgesehen, wobei die Haspeln durch Drehen des Haspelträgers nacheinander in dem Bereich der Vorrichtung zur Bereitstellung des Faserstrangs und der Vorrichtung zur Weiterverarbeitung des aufgehaspelten Faserbündels gedreht werden können. Dies ermöglicht die bereits weiter oben beschriebene quasi kontinuierliche Verarbeitung des Faserstrangs.

Weiterhin vorteilhafterweise fällt bei der erfindungsgemäßen Vorrichtung zum Aufhaspeln eines Faserbündels die Drehachse des Haspelträgers mit dessen Längsachse zusammen. Insbesondere wird so eine besonders platzsparende Konstruktion ermöglicht, da so die Haspeln seitlich am Haspelträger angeordnet werden können und insbesondere bei der Verwendung von Zweizinkenhaspeln die Gesamtkonstruktion aus Haspelträger und Haspeln nicht viel größer ist als eine einzige Haspel.

Vorteilhafterweise ist die Drehachse des Haspelträgers dabei horizontal angeordnet. Insbesondere ermöglicht dies bei der Weiterverarbeitung der Faserbündel eine besonders einfache Zugänglichkeit dieser Faserbündel, indem die Zweizinkenhaspeln parallel zum Haspelträger angeordnet werden.

Weiterhin umfaßt die vorliegende Erfindung ein Verfahren zum Aufhaspeln von Faserbündeln, insbesondere von Hohlfasermembranbündeln, insbesondere für die Herstellung von Dialysefiltern, welches die gleichen erfindungsgemäßen Vorteile hat wie die oben beschriebene Vorrichtung. Bei diesem Verfahren kommt eine Haspelanordnung zum Einsatz, mit einem um eine Hauptachse drehbaren Haspelträger und mit mindestens zwei Haspeln, welche an dem Haspelträger drehbar gelagert sind, wobei die Drehachsen der Haspeln senkrecht auf der Hauptachse des Haspelträgers stehen. Dabei umfaßt das erfindungsgemäße Verfahren die folgenden Schritte: Aufhaspeln eines Faserbündels auf einer ersten Haspel, Drehen des Haspelträgers um die Hauptachse, Weiterverarbeitung des Faserbündels auf der ersten Haspel und gleichzeitiges Aufhaspeln eines Faserbündels auf der nächsten Haspel. Dieses Verfahren ermöglicht einen quasi kontinuierlichen Betrieb und ist hoch effizient. Insbesondere muß der Stofffluß zum Beispiel aus einer Spinnmaschine nicht unterbrochen werden. Auch ermöglicht das Aufhaspeln des Faserstrangs durch Drehung der Haspeln um eine Achse, welche senkrecht auf der Drehachse des Haspelträgers steht, den Haspelträger zu drehen, ohne daß hierfür ein großer Bereich freigehalten werden müßte. Dies ermöglicht eine hohe Zugänglichkeit des Faserbündels, insbesondere im Weiterverarbeitungsschritt.

Vorteilhafterweise wird bei dem erfindungsgemäßen Verfahren der Faserstrang beim Aufhaspeln durch die Rotation eines Haspelbalkens um an dessen Enden angeordnete Wickeldorne gewickelt, so daß sich das aufgehaspelte Faserbündel entlang des Haspelbalkens erstreckt. Ein solches Aufhaspeln auf eine Zweizinkenhaspel ermöglicht insbesondere in Kombination mit den aufeinander senkrecht stehenden Drehachsen der Haspeln und des Haspelträgers eine hervorragende Zugänglichkeit des aufgehaspelten Faserbündels.

Vorteilhafterweise beträgt bei dem erfindungsgemäßen Verfahren die Länge des aufgehaspelten Faserbündels mindestens das dreifache der Länge der mit den Hohlfasermembranbündeln hergestellten Filterabschnitte von Dialysefiltern. So kann in einem Aufhaspelvorgang ein sehr langes Faserbündel hergestellt werden, welches daraufhin bei der Weiterverarbeitung in einzelne Faserbündelabschnitte geschnitten wird, welche dann den für die Filterabschnitte der Dialysefilter benötigten Hohlfasermembranbündeln entsprechen. So können in einem Schritt sehr viele einzelne Filterabschnitte hergestellt werden, wobei zusätzlich die Verschnittverluste erheblich verringert werden können. Insbesondere bei Verwendung einer Zweizinkenhaspel und des entsprechend langen Linearbündels ergibt sich nur noch ein minimaler Verschnitt. Vorteilhafterweise beträgt die Länge des aufgehaspelten Faserbündels dabei das fünffache, und weiterhin vorteilhafterweise das achtfache der Länge der mit den Hohlfasermembranbündeln hergestellten Filterabschnitte.

Vorteilhafterweise nimmt bei dem erfindungsgemäßen Verfahren durch das Drehen des Haspelträgers um die Hauptachse die nächste Haspel die vorher von der ersten Haspel eingenommene Position ein. Durch Drehen des Haspelträgers um einen festen Winkelbereich wird so eine beladene Haspel zur Weiterverarbeitung in dem Bereich einer Weiterverarbeitungsmaschine gedreht, während eine leere Haspel zum neuerlichen Aufhaspeln in den Bereich zum Beispiel einer Spinnanlage gedreht wird.

Vorteilhafterweise fällt bei dem erfindungsgemäßen Verfahren die Drehachse des Haspelträgers mit dessen Längsachse zusammen und die Haspeln bestehen jeweils im wesentlichen aus einem Haspelbalken mit an den Enden des Haspelbalkens angeordneten Haspelköpfen mit Wickeldorn, wobei vor dem Drehen des Haspelträgers die Haspelbalken in eine mit dem Haspelträger im wesentlichen parallele Position gebracht werden. Insbesondere kann so der freizuhaltende Drehradius zum Drehen des Haspelträgers minimiert werden. Damit ergibt sich eine Anordnung, bei der zum Beispiel Vorrichtungen zur Weiterverarbeitung nur um einen geringen Weg aus dem Drehradius der Haspeln herausgedreht werden müssen, was die Effektivität des Verfahrens erheblich erhöht.

Vorteilhafterweise verbleibt der Haspelbalken einer beladenen Haspel während des Weiterverarbeitungsschritts in seiner im wesentlichen parallelen Position zum Haspelträger. Insbesondere können so auch mehr als zwei Haspeln verwendet werden. Außerdem ergibt sich eine hervorragende Zugänglichkeit des auf der Haspel aufgehaspelten Faserbündels.

Vorteilhafterweise wird der Faserstrang bei dem erfindungsgemäßen Verfahren kontinuierlich bereitgestellt, insbesondere durch kontinuierliches Spinnen des Faserstrangs, wobei der Faserstrang in einer Speichervorrichtung zwischengespeichert wird, während durch Drehen des Haspelträgers die nächste Haspel bereitgestellt wird. So können kontinuierliche Spinnmaschinen eingesetzt werden und ein quasi-kontinuierlicher Betrieb der Haspelmaschine wird möglich. Das während der Zeit, welche zur Bereitstellung einer leeren Haspel benötigt wird, produzierte Faserstrang wird dabei in der Speichervorrichtung zwischengespeichert. Eine solche Speichervorrichtung besteht dabei vorteilhafterweise aus einer Tänzeranordnung.

Vorteilhafterweise wird dabei die Haspel mit einer höheren Rotationsgeschwindigkeit betrieben, bis der in der Speichervorrichtung gespeicherte Faserstrang eine gewisse Länge unterschreitet, woraufhin die Haspel mit einer niedrigeren Rotationsgeschwindigkeit betrieben wird. Vorteilhafterweise entspricht die niedrigere Rotationsgeschwindigkeit dabei der üblichen Aufhaspelgeschwindigkeit, während die höhere Rotationsgeschwindigkeit dazu verwendet wird, das während der Bereitstellung der Haspel gespeicherte Material aufzuhaspeln.

Weiterhin vorteilhafterweise wird beim erfindungsgemäßen Verfahren der Faserstrang kontinuierlich bereitgestellt, insbesondere durch kontinuierliches Spinnen des Faserstrangs, wohingegen der Faserstrang mit schwankender Geschwindigkeit aufgehaspelt wird, insbesondere beim Anfahren bzw. Stoppen der Haspel und/oder durch Rotation der Haspel mit im wesentlichen konstanter Geschwindigkeit, wobei die schwankende Geschwindigkeit des Aufhaspelns durch eine Speichervorrichtung ausgeglichen wird.

Da insbesondere bei der Verwendung einer Zweizinkenhaspel die Aufhaspelgeschwindigkeit bei konstanter Drehgeschwindigkeit der Haspel einen ungleichförmigen Verlauf entsprechend einem abgerundeten Sägezahn hat, kann das Speichern des kontinuierlich bereitgestellten Faserstrangs diese Schwankungen wieder ausgleichen. Gleiches gilt beim Anfahren der Haspel zu Beginn des Haspelvorgangs und bei Stoppen der Haspel zum Ende des Haspelvorgangs.

Vorteilhafterweise wird dabei die Rotationsgeschwindigkeit der Haspel nachgeregelt, wenn gewissen Grenzwerte für den in der Speichervorrichtung gespeicherten Faserstrang über- bzw. unterschritten werden. So ist sichergestellt, daß die Speicherkapazität der Speichervorrichtung nicht überschritten wird und dennoch ein kontinuierlicher Betrieb möglich ist. Sind diese oberen und unteren Grenzwerte für die Länge des in der Speichervorrichtung gespeicherten Faserschranks nicht über- bzw. unterschritten, kann die Haspel dagegen mit einer konstante Rotationsgeschwindigkeit betrieben werden. So vermindert sich der Regelaufwand für den Antrieb der Haspeln erheblich.

Vorteilhafterweise wird in dem erfindungsgemäßen Verfahren die Spannung des Faserstrangs insbesondere über die Speichereinrichtung eingestellt. So kann ein besonders gleichmäßiges Faserbündel erreicht werden.

Vorteilhafterweise wird dabei die Spannung des Faserstrangs über eine Fadenspannungsmeßeinrichtung gemessen und gegebenenfalls nachgeregelt. Vorteilhafterweise erfolgt diese Nachregelung wiederum über die Speichereinrichtung.

Weiterhin vorteilhafterweise wird dabei der Faserstrang über eine Tänzerrolle der Speichereinrichtung unter Spannung gehalten, insbesondere über eine massearme Zugkraftvorrichtung wie zum Beispiel ein drehmomentgesteuerter Servomotor, insbesondere in Verbindung mit einem leichtgängigen Zahnriemenantrieb. So kann einerseits eine genaue Einstellung der Spannung des Faserstrangs erreicht werden, andererseits kann insbesondere durch die massearme Zugkraftvorrichtung ein unerwünschtes Schwingen der Speichereinrichtung vermieden werden.

Vorteilhafterweise wird bei dem erfindungsgemäßen Verfahren zum Aufhaspeln von Faserbündeln der Anfang des Faserstrangs an der Haspel festgeklemmt, woraufhin das Aufhaspeln startet und nach einer festgelegten Anzahl von Umdrehungen endet, woraufhin auch das Ende des Faserstrangs an der Haspel festgeklemmt wird. So ist nach dem Aufhaspeln ein festgelegtes Faserbündel auf der Haspel aufgehaspelt und steht zur Weiterverarbeitung bereit.

Vorteilhafterweise wird in dem erfindungsgemäßen Verfahren weiterhin nach dem Aufhaspeln des Faserbündels auf einer ersten Haspel der Faserstrang von einem Übergabegreifer erfaßt, geschnitten und nach Drehen des Haspelträgers an die nächste Haspel übergeben. Dies ermöglicht einen quasi kontinuierlichen Betrieb des Aufhaspelns bzw. Weiterverarbeitens.

Die losen Enden des Faserstrangs werden vorteilhafterweise durch Greifer gegriffen.

Weiterhin vorteilhafterweise wird in dem erfindungsgemäßen Verfahren die Zugspannung im aufgehaspelten Faserbündel zur Weiterverarbeitung des Faserbündels durch Verschieben der Wickeldorne vermindert, insbesondere kann so sichergestellt werden, daß sich die Länge des Faserbündels nach der Weiterverarbeitung nicht nochmals reduziert, was die Paßgenauigkeit der hergestellten Faserbündel erhöht.

Vorteilhafterweise wird weiterhin das durch das Aufwickeln um die Wickeldorne einer Zweizinkenhaspel zweigeteilte Faserbündel in einem im wesentlichen kreisförmigen Querschnitt gebracht. Bei der Verwendung einer Zweizinkenhaspel liegen zwei durch die Größe der Wickeldorne voneinander getrennte Einzelfaserbündel vor, welche parallel und nebeneinander verlaufen und so zu einem einzigen Faserbündel zusammengefaßt werden. Dadurch, daß die zweitgeteilten Faserbündel in einem wesentlichen kreisförmigen Querschnitt gebracht werden, wird die Weiterverarbeitung wie zum Beispiel das Umwickeln des Faserbündels erleichtert und die Genauigkeit des Verfahrens erhöht.

Vorteilhafterweise wird weiterhin in dem erfindungsgemäßen Verfahren zum Aufhaspeln von Faserbündeln das Faserbündel bei der Weiterverarbeitung mit einer Folienbahn umwickelt, deren Länge der Länge des Faserbündels entspricht. Insbesondere die hervorragende Zugänglichkeit des Faserbündels bei der Weiterverarbeitung ermöglicht diesen Schritt, so daß auf ein Abnehmen des Faserbündels von der Haspel und ein darauf folgendes spiralförmiges Umwickeln verzichtet werden kann. Vielmehr wird bei dem erfindungsgemäßen Verfahren eine einzige Folienbahn verwendet, welche über die gesamte Länge des Faserbündels um das noch auf der Haspel aufgehaspelte Faserbündel gewickelt wird. Dies ermöglicht ein besonders schnelles und einfaches Umwickeln, welches eine gleichmäßige Verarbeitung über die gesamte Länge des Faserbündels garantiert.

Vorteilhafterweise wird dabei das Faserbündel durch die Umwicklung mit der Folie komprimiert. So kann durch das Umwickeln mit der Folie automatisch der gewünschte Durchmesser des Faserbündels eingestellt werden.

Weiterhin vorteilhafterweise wird die um das Faserbündel gewickelte Folie fixiert, insbesondere geschweißt.

Weiterhin vorteilhafterweise wird bei dem erfindungsgemäßen Verfahren das Faserbündel bei der Weiterverarbeitung in mehrere kleinere Bündelabschnitte geschnitten. Wird also ein sehr langes Faserbündel aufgehaspelt, welches ein Vielfaches der für ein Filterabschnitt eines Dialysefilters benötigten Bündelabschnitts beträgt, kann durch Schneiden des aufgehaspelten Faserbündels in mehrere kleinere Bündelabschnitte äußerst effizient und kostengünstig mit minimalen Verschnittverlusten in einem Arbeitsschritt eine Vielzahl von Bündelabschnitten hergestellt werden. Die nicht verwertbaren Teile des Faserbündels im Bereich der 180°-Umlenkungen an den Haspeldornen werden, nachdem die Klemmvorrichtungen geöffnet worden sind, mittels einer Saugvorrichtung entsorgt.

Vorteilhafterweise wird bei dem erfindungsgemäßen Verfahren weiterhin eine der Vorrichtungen zum Aufhaspeln von Faserbündeln, welche weiter oben beschrieben wurden, verwendet. Dies ergibt insbesondere auch die dort dargestellten Vorteile.

Eine Vorrichtung zum Umwickeln eines Faserbündels, insbesondere eines Hohlfasermembranbündels insbesondere für die Herstellung von Dialysefiltern mit einer Folie, umfaßt vorteilhafterweise eine Aufnahme aus einem ersten und einem zweiten Seitenelement und einer zwischen diesen befestigten flexiblen Rinne zur Aufnahme der Folie sowie des Faserbündels, wobei ein Antrieb vorgesehen ist, um zumindest das erste Seitenelement quer zur Rinne zu bewegen. Weiterhin ist mindestens ein quer zur Rinne beweglicher Umleger zum Umlegen der Folie um das Faserbündel vorgesehen.

Eine solche Vorrichtung ermöglicht ein einfaches und automatisches Umwickeln eines Faserbündels, indem zuerst das Faserbündel auf einer Folie in die flexible Rinne gelegt wird, daraufhin durch Bewegen des Umlegers in den Bereich der Rinne die Folie um das Faserbündel gelegt wird und daraufhin durch Bewegen der Seitenelemente aufeinander zu die Folie um das Faserbündel gewickelt wird und das Faserbündel komprimiert wird. So kann ein Faserbündel schnell über seine gesamte Länge mit einer Folienbahn umwickelt werden, wobei gleichzeitig die Packungsdichte des Faserbündels sowie sein Durchmesser exakt reproduzierbar eingestellt werden kann. Insbesondere durch den Antrieb zur Bewegung des Seitenelements können die ansonsten oft auftretenden Abweichungen ausgeschlossen werden. Der Antrieb kann dabei pneumatisch, hydraulisch oder durch einen Motor erfolgen.

Vorteilhafterweise beträgt dabei die Länge des zu umwickelnden Faserbündels mindestens das dreifache der Länge der mit den Hohlfasermembranbündeln hergestellten Filterabschnitte von Dialysefiltern. So kann zunächst ein sehr langes Faserbündel umwickelt werden, welches daraufhin in mehrere Teilbündel aufgetrennt wird. Dies ermöglicht eine besonders effektive Verarbeitung. Vorteilhafterweise beträgt dabei die Länge des zu umwickelnden Faserbündels weiterhin mindestens die fünffache Länge und weiterhin mindestens die zehnfache Länge eines aus dem Hohlfasermembranbündel hergestellten Filterabschnitts.

Weiterhin vorteilhafterweise umfaßt die Vorrichtung zum Umwickeln eines Faserbündels eine Vorrichtung zur Fixierung, insbesondere zum Verschweißen der um das Faserbündel gelegten Folie. Vorteilhafterweise verschweißt diese Vorrichtung dabei lediglich die übereinander geschlagenen Enden der Folie miteinander, ohne die Folie am Faserbündel zu fixieren.

Weiterhin vorteilhafterweise umfaßt die Vorrichtung weiterhin eine Vorrichtung zum Schneiden des Faserbündels in mehrere Abschnitte. So kann nach dem Umwickeln und gegebenenfalls Fixierens der Folie das Faserbündel in mehrere Abschnitte geschnitten werden, welche dann den Filterabschnitten der Dialysefilter entsprechen. Die Rinne und die Seitenelemente sind an den Stellen unterbrochen, so die Schneidevorrichtung das Bündel durchtrennt. Vorteilhafterweise besteht dabei die Vorrichtung zum Schneiden des Faserbündels aus mindestens einem entlang des Faserbündels verfahrbaren Schneidinstrument.

Vorteilhafterweise weist die Rinne der Vorrichtung zum Umwickeln eines Faserbündels Aussparungen auf, durch welche der Umleger bewegt werden kann. So kann der Umleger noch unterhalb der Oberkante der Rinne in deren Bereich hineinbewegt werden, was ein besonders effektives Umlegen der Folie ermöglicht. Weiterhin umfaßt die Rinne vorteilhafterweise Aussparungen, durch welche eine Fixierung vorgenommen werden kann. So kann das durch die Bewegung der Seitenelemente komprimierte Faserbündel zuerst durch die Fixierung der Folie in seiner Form gesichert werden, bevor sich die Rinne wieder öffnet, um das Faserbündel bzw. die Faserbündelabschnitte freizugeben.

Vorteilhafterweise kann eine zur Rinne gewandte vordere Kante des ersten Seitenelements an der zur Rinne gewandten vorderen Kante des zweiten Seitenelements vorbeibewegt werden, so daß die flexible Rinne zu einem Zylinder gebogen wird. Durch eine weitere Bewegung des ersten Seitenelements kann dabei vorteilhafterweise die Größe des Zylinders verändert werden. So kann das Faserbündel komprimiert werden, während es gleichzeitig mit Folie umwickelt wird. Vorteilhafterweise ist es dabei möglich, unterschiedliche Durchmesser für das Faserbündel einzustellen.

In einer ersten Ausführungsvariante weist die flexible Rinne entlang ihrer dem ersten Seitenelement zugewandten Längsseite dort Aussparungen auf, wo sie mit ihrer anderen Längsseite am zweiten Seitenelement befestigt ist und/oder umgekehrt. Dies ermöglicht es, die vordere Kante des zweiten Seitenelements so durch die Aussparungen auf der anderen Seite in der flexiblen Rinne zu schieben, das die flexible Rinne einen Zylinder bildet.

Vorteilhafterweise weist dabei zumindest eines der Seitenelemente Vorsprünge sowie Aussparungen auf, wobei die flexible Rinne an den Vorsprüngen befestigt ist und die Aussparungen im Seitenelement in Aussparungen entlang dieser Längsseite der Rinne übergehen. So können die Vorsprünge des Seitenelements zusammen mit einem Teil der an ihnen befestigten Längsseite der flexiblen Rinne in die Aussparungen auf der anderen Seite der flexiblen Rinne hineinstoßen und durch diese hindurchgehen, so daß der Durchmesser des von der flexiblen Rinne gebildeten Zylinders eingestellt werden kann.

Hierzu gehen vorteilhafterweise die Vorsprünge der Seitenelemente bei einer Bewegung der Seitenelemente aufeinander zu durch die Aussparung auf der gegenüberliegenden Längsseite der Rinne.

Vorteilhafterweise weisen dabei beide Seitenelemente Vorsprünge und Aussparungen auf. Dies ermöglicht eine besonders stabile Ausgestaltung der flexiblen Rinne.

Vorteilhafterweise besteht die flexible Rinne dabei aus einem Material, welches einen geringen Reibungskoeffizienten mit der verwendeten Folie aufweist, da bei der oben beschriebenen ersten Ausführungsvariante der Vorrichtung zum Umwickeln eines Faserbündels die Folie in der flexiblen Rinne gleitet, um ein glattes Anliegen der Folie auf dem weiter zu komprimierenden Faserbündel zu ermöglichen.

Vorteilhafterweise besteht die flexible Rinne dabei aus einem dünnen Stahlblech bzw. einer Stahlfolie. Dies ermöglicht einerseits eine sehr stabile flexible Rinne, welche andererseits den geforderten niedrigen Reibungskoeffizienten mit der Folie aufweist.

In einer zweiten Ausführungsvariante ist vorteilhafterweise die Kante eines der Seitenelemente, an der die flexible Rinne befestigt ist, als Messerkante geformt. Die entsprechende Kante des anderen Seitenelements kann dann über die Messerkante hinweg bewegt werden und das auf dem Faserbündel aufliegende Ende der Folie so unter das an der Messerkante anliegende andere Folienende schieben. Diese Ausführung hat den Vorteil, daß die flexible Rinne nur wenige Durchbrüche aufweist und die Folie so fast überall aufliegt.

Vorteilhafterweise ist dabei der Abstand zwischen der Oberseite der Messerkante und der Unterseite der Kante des anderen Seitenelements klein im Vergleich zum Durchmesser der flexiblen Rinne, so daß sich die Messerkante nur knapp unterhalb der gegenüberliegenden Kante befindet. Hierdurch wird insbesondere erreicht, daß das komprimierte Faserbündel nicht unrund wird.

Vorteilhafterweise besteht dabei die flexible Rinne aus einem Material, dessen Reibungskoeffizient mit der verwendeten Folie höher ist als der Reibungskoeffizient der verwendeten Folie mit sich selbst. Hierdurch wird erreicht, daß die Folie durch die Reibung nicht auf der flexiblen Rinne gleitet, sondern die Folie durch die Bewegung der flexiblen Rinne mitgeführt wird. Hierdurch kann das an der Messerkante anliegende Ende der Folie über das bereits um das Faserbündel gelegte freie Ende der Folie geschoben werden.

Vorteilhafterweise besteht die flexible Rinne dabei aus einem Gewebetuch, insbesondere aus einem dünnen und/oder gummierten Gewebetuch. Dies ermöglicht insbesondere einen hohen Reibungskoeffizienten mit der Folie.

Vorteilhafterweise ist dabei das Gewebetuch an den durchgehenden Kanten der Seitenelemente angebracht und hängt zwischen diesen durch. Dieses durchhängende Gewebetuch bildet nun die flexible Rinne. Der Durchmesser des Faserbündels läßt sich über das Durchhängen des Wickeltuchs oder den Verfahrweg der Vorrichtung einstellen.

Bei einem Verfahren zum Umwickeln eines Faserbündels, insbesondere eines Hohlfasermembranbündels insbesondere für die Herstellung von Dialysefiltern mit einer Folie, wird vorteilhafterweise in einem ersten Schritt das Faserbündel auf einer Folie in einer Aufnahme aus einem ersten und einem zweiten Seitenelement und einer zwischen diesem befestigten flexiblen Rinne gelegt . Daraufhin wird zumindest eine freie Längsseite der Folie mit einem quer zur Rinne beweglichen Umleger um das Faserbündel gelegt, woraufhin die Seitenelemente durch Ansteuerung eines Antriebs für die Bewegung zumindest eines der Seitenelemente aufeinander zu bewegt werden.

Dieses Verfahren ermöglicht eine automatisierte Umwicklung des Faserbündels mit Folie, wobei die beweglichen Umleger ein einfaches Umlegen der Folie und die genau zu kontrollierende Bewegung der Seitenelemente zusätzlich auch eine exakte Komprimierung des Faserbündels ermöglichen. So lassen sich einfach und effizient Faserbündel mit hervorragender Genauigkeit herstellen.

Vorteilhafterweise wird dabei das Faserbündel durch das Bewegen der Seitenelement komprimiert. Vorteilhafterweise können dabei unterschiedliche Durchmesser des Faserbündels eingestellt werden.

Weiterhin vorteilhafterweise wird die Folie nach dem Umlegen fixiert und insbesondere mit sich selbst verschweißt. Weiterhin vorteilhafterweise wird das Faserbündel in mehrere Faserbündelabschnitte geschnitten.

Vorteilhafterweise beträgt die Länge des zu umwickelnden Faserbündels dabei mindestens die dreifache Länge des mit dem Hohlfasermembranbündel hergestellten Filterabschnitts von Dialysefiltern. Weiterhin vorteilhafterweise beträgt die Länge mindestens das fünffache und weiterhin vorteilhaft mindestens das Zehnfache dieser Länge. So können in einem einzigen Arbeitsgang eine Vielzahl von Faserbündelabschnitten hergestellt werden.

Vorteilhafterweise wird dabei eine zur Rinne gewandte vordere Kante des ersten Seitenelements an der zur Rinne gewandten vorderen Kante des zweiten Seitenelements vorbeibewegt, so daß die flexible Rinne zu einem Zylinder gebogen wird. So läßt sich das Faserbündel besonders einfach komprimieren und umwickeln.

In einer ersten alternativen Ausführung des Verfahrens sind beide Längsseiten der Folie frei und werden durch Umleger nacheinander über das Faserbündel gelegt, so daß sie sich überlappen. Hierzu sind auf beiden Seiten der Rinne jeweils quer zur Rinne bewegbare Umleger angeordnet. Bei dieser Verfahrensalternative wird also zuerst das Faserbündel komplett umwickelt und danach durch Bewegung der Seitenelemente komprimiert.

Vorteilhafterweise weist dabei zumindest eines der Seitenelemente eine vordere Kante bildende Vorsprünge auf, welche durch entsprechende Aussparungen auf der gegenüberliegenden Seite der Rinne hindurchbewegt werden, so daß die Rinne einen Zylinder bildet.

Vorteilhafterweise gleitet dabei die Folie auf der Oberfläche der flexiblen Rinne entlang. Dies erlaubt eine Komprimierung des Faserbündels auf einen eingestellten Durchmesser, ohne zu Falten in der Folie zu führen.

In einer zweiten alternativen Ausführung des Verfahrens wird eine erste Längsseite der Folie von einer als Messerkante geformten Kante eines Seitenelements unter die Kante des anderen Seitenelements geschoben. So wird nur eine freie Seite von einem Umleger auf das Faserbündel umgelegt, während die andere Seite noch an der Messerkante anliegt und von dieser bewegt wird.

Vorteilhafterweise wird dabei die erste Längsseite, welche an der Messerkante anliegt, über die auf dem Faserbündel aufliegende freie Längsseite geschoben. Hierdurch wird das Faserbündel gleichzeitig umwickelt und komprimiert.

Hierfür wird die Folie vorteilhafterweise durch die Reibung mit der flexiblen Rinne von dieser mitbewegt. Dadurch, daß die Reibung zwischen Folie und flexibler Rinne größer ist als die Reibung der Folienseiten aufeinander, kann durch die Bewegung der Seitenelemente die Folien mitbewegt werden, so daß das festgehaltene Ende über das freie Ende gleitet und so das Faserbündel faltenfrei umwickelt wird.

Vorteilhafterweise wird das Verfahren zum Umwickeln eines Faserbündels mit den weiter oben beschriebenen Vorrichtungen zum Umwickeln eines Faserbündels verwendet. Dabei ergeben sich die gleichen Vorteile wie bei den Vorrichtungen.

Eine Vorrichtung zum Konfektionieren eines Faserbündels, insbesondere eines Hohlfasermembranbündels insbesondere für die Herstellung von Dialysefiltern, besteht vorteilhafterweise aus einer Kombination aus einer der oben beschriebenen Vorrichtungen zum Aufhaspeln von Faserbündeln sowie einer oben beschriebenen Vorrichtung zum Umwickeln eines Faserbündels . Insbesondere dadurch, dass bei der Vorrichtung zum Aufhaspeln von Faserbündeln die Drehachsen der Haspeln senkrecht auf der Hauptachse des Haspelträgers stehen, bedarf es zum Drehen des Haspelträgers und damit zum Wechsel einer Haspel zwischen der Haspeistellung um der Umwicklungsstellung nur eines sehr kleinen freizuhaltenden Bereichs, so daß die Vorrichtung zum Umwickeln des Faserbündels vorteilhafterweise neben dem Haspelträger parallel zu diesem angeordnet ist und lediglich vertikal bewegt werden muß, um das Faserbündel in die flexible Rinne zu legen.

Ein besonderer Vorteil ist weiterhin, daß bei einer Verwendung einer Zweizinkenhaspel das auf einer solchen Haspel aufgehaspelte Faserbündel sehr leicht zugänglich ist. Dieses aus zwei Einzelsträngen bestehende Faserbündel wird dabei vorteilhafterweise zuerst zu einem einzelnen Faserbündel zusammengeschoben und dann mit Folie umwickelt. Beim Zuschneiden des Langfaserbündels in einzelnen kleinere Faserbündelabschnitte kann das Faserbündel dann zugleich von den Wickeldornen getrennt werden, auf welchen es bis dahin weiterhin aufgespannt ist.

Weiterhin besteht ein entsprechendes Verfahren zum Konfektionieren eines Faserbündels, insbesondere eines Hohlfasermembranbündels insbesondere für die Herstellung von Dialysefiltern, vorteilhafterweise aus einer Kombination eines der oben beschriebenen Verfahren zum Aufhaspeln von Faserbündeln und eines der oben beschriebenen Verfahren zum Umwickeln eines Faserbündels . Hierbei ergeben sich wiederum die oben bereits beschriebenen Vorteile.

Besonders vorteilhaft ist es dabei, wenn das Faserbündel auf der Haspel aufgespannt bleibt, während es mit Folie umwickelt wird. So können sich die einzelnen Faserstränge nicht gegeneinander verschieben und das Faserbündel behält während des Umwickeln die richtige Form.

Die vorliegende Erfindung wird nun anhand von Ausführungsbeispielen und Zeichnungen näher erläutert. Dabei zeigen
- Figur 1:: eine Seitenansicht eines Ausführungsbeispiels der erfindungsgemäßen Vorrichtung zum Aufhaspeln von Faserbündeln,
- Figur 2:: eine Draufsicht des Ausführungsbeispiels der erfindungsgemäßen Vorrichtung zum Aufhaspeln von Faserbündeln,
- Figur 3:: eine perspektivische Ansicht eines ersten Ausführungsbeispiels der Vorrichtung zum Umwickeln eines Faserbündels,
- Figur 4:: eine weitere perspektivische Ansicht des ersten Ausführungsbeispiels der Vorrichtung zum Umwickeln eines Faserbündels,
- Figur 5:: eine perspektivische Ansicht des im ersten Ausführungsbeispiel der Vorrichtung zum Umwickeln eines Faserbündels verwendeten Wickelblechs,
- Figur 6:: eine Seitenansicht des ersten Ausführungsbeispiels der Vorrichtung zum Umwickeln eines Faserbündels,
- Figur 7:: eine Schnittansicht eines umwickelten Faserbündels gemäß dem ersten Ausführungsbeispiel der Vorrichtung zum Umwickeln eines Faserbündels,
- Figur 8:: eine erste Seitenansicht eines zweiten Ausführungsbeispiels der Vorrichtung zum Umwickeln eines Faserbündels,
- Figur 9:: eine weitere Seitenansicht des zweiten Ausführungsbeispiels der Vorrichtung zum Umwickeln eines Faserbündels,
- Figuren 10 a - 10 c:: drei Schritte des Umwickelns eines Faserbündels gemäß dem zweiten Ausführungsbeispiel der Vorrichtung zum Umwickeln eines Faserbündels.

Eine Faserspinnanlage nach dem Stand der Technik erzeugt eine große Anzahl von einzelnen Hohlfasern gleichzeitig, z.B. 768 Einzelfasern. Die Einzelfasern einer Spinnmaschine werden zusammengeführt als gemeinsamer Strang der Haspelmaschine zugeführt. Die Haspelmaschine erzeugt aus dem Strang die Hohlfaserbündel, die in weiteren Arbeitsschritten konfektioniert werden. Unter Konfektionierung wird das Umwickeln der Bündel mit einer Wickelfolie, die Fixierung der um das Bündel herum gewickelten Wickelfolie sowie das Ablängen des umwickelten Bündels auf die benötigte Länge verstanden. Die Wickelfolie ist in diesem Konfektionierungsprozess ein Hilfsmittel und hat die Aufgabe, das Faserbündel in Form zu halten und das sichere Einführen des Faserbündelabschnitts in die Filterkartusche zu ermöglichen. Nach dem späteren Einführen in die Filterkartusche wird die Wickelfolie herausgezogen und der Faserbündelabschnitt dehnt sich in der Kartusche aus.

Es wird eine neue Haspelmaschine mit integrierter Bündelkonfektionierung für die automatisierte Herstellung und Konfektionierung von Hohlfasermembranbündelabschnitten beschrieben. Gegenstand dieser Erfindung ist die Haspelmaschine und das Haspelverfahren einschließlich der automatischen Übergabe der Hohlfasermembranbündel an eine neue Bündelkonfektionierungsvorrichtung. Die Hohlfasern werden in einer Faserspinnanlage nach dem Stand der Technik hergestellt und an die Tänzervorrichtung der neuen Haspelmaschine übergeben.

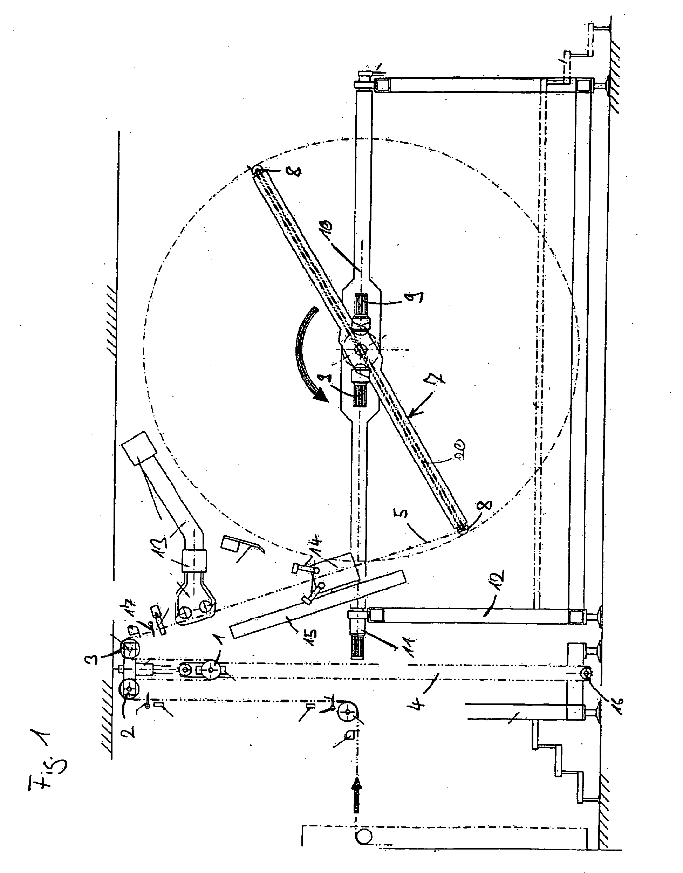

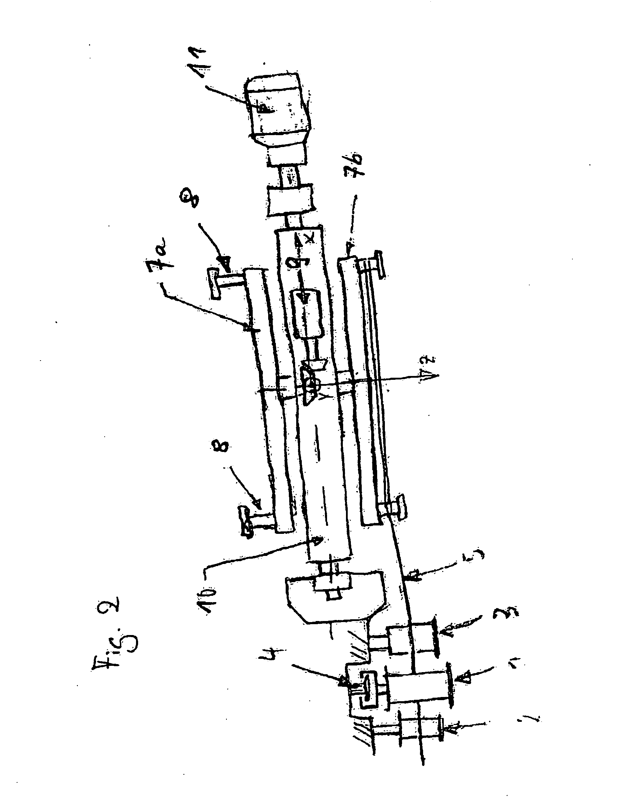

Das in der Fig. 1 und Fig. 2 dargestellte Ausführungsbeispiel der Erfindung zeigt Haspeln 7, deren Drehachsen senkrecht auf der Hauptachse des Haspelträgers 10 stehen, d. h. die Drehachsen der Haspeln 7 und die Hauptachse des Haspelträgers 10 sind so zueinander angeordnet, dass es für die Haspeln 7 jeweils eine auf der Hauptachse des Haspelträgers 10 senkrecht stehende Ebene gibt, in der die Drehachse der Haspel verläuft. Hierdurch ist der Abstand der Drehachsen der Haspeln von der Hauptachse des Haspelträgers kleiner als der Drehradius der Haspeln, was eine besonders kompakte Anordnung ergibt. Damit nach einem Drehen des Haspelträgers die nachfolgende Haspel die gleiche Position einnimmt wie die vorangegangene, verlaufen weiterhin die Drehachsen der Haspeln in einer gemeinsamen Ebene. Zudem weisen die Drehachsen der Haspeln den gleichen Abstand von der Hauptachse des Haspelträgers auf. In dem in Fig. 1 und 2 gezeigten Ausführungsbeispiel ist dieser Abstand gleich null, so dass die Drehachsen der Haspeln 7 die Hauptachse des Haspelträgers 10 schneiden.

Das in der Fig. 1 und Fig. 2 dargestellte Ausführungsbeispiel zeigt dabei eine als Haspelträger dienende Trommel 10, welche um eine Hauptachse drehbar gelagert ist. An der Trommel 10 sind zwei gegenüber angeordneten Haspelbalken 7 drehbar gelagert, wobei die koaxialen Drehachsen der Haspelbalken 7 senkrecht auf der Hauptachse der Trommel 10 stehen. Die sehr weit auseinander liegenden Wickeldorne 8 sind an den Enden der Haspelbalken 7 angeordnet, so dass der nachgeführte Faserstrang 5 bei der Drehung der Haspelbalken 7 von den Wickeldornen 8 aufgewickelt wird.

Beim Start des Haspelvorgangs wird der Anfang des Faserstranges an einem der Haspelbalken 7, vorzugsweise an einem der beiden Wickeldorne 8, mittels eines Greifers ("Anfangsklemme") festgehalten. Nach dem Haspeln wird der Faserstrang an einem der beiden Wickeldorne 8 mittels eines weiteren Greifers ("Endklemme") fixiert und anschließend durchtrennt, wobei das freie Ende des Stranges 5, also der Anfang des nächsten Bündels, von einem Übergabegreifer 14 gehalten wird, der den Strang anschließend einem weiteren Haspelbalken 7 bzw. an dessen Anfangsklemme übergibt. Das Durchtrennen des Faserstrangs kann mittels einer in den Greifer integrierten Trennvorrichtung erfolgen.

Mindestens zwei Haspelbalken 7 sind an einer um eine Drehachse drehbaren Trommel 10 gelagert, wobei die Drehachsen der Haspeln 7 senkrecht auf der Drehachse der Trommel 10 stehen. Dadurch kann quasi-kontinuierlich auf einem Haspelbalken gehaspelt werden, während der zweite beladene Haspelbalken sein Faserbündel automatisch an die Konfektionierung übergibt. So ist eine quasikontinuierliche Verknüpfung von Spinnprozess und Hohlfaserbündelkonfektionierung möglich, insbesondere da die Länge des aufgehaspelten Faserbündels viel länger ist als die Länge eines fertigen Bündelabschnitts. Durch das Haspeln erfolgt eine besonders schonende Verarbeitung der empfindlichen Hohlfasern.

Mit der vorliegenden Erfindung können aus einem zwischen den Wickeldornen 8 aufgehaspelten Bündel viele Faserbündelabschnitte gleichzeitig in einem Arbeitsgang gefertigt werden. Die Übergabevorgänge des Stands der Technik entfallen. Der Haspelbalken 7 kann eine Länge von mehreren Metern aufweisen.

Die neue Haspelmaschine stellt dabei Bündel 20 her, die sehr viel länger sind als die Länge eines fertigen Bündelabschnitts (z.B. mehrere Meter Länge). Das Bündel 20 wird mit seiner gesamten Länge an die Konfektionierung übergeben und in ganzer Länge automatisch mit Wickelfolie 25 von der Rolle umwickelt. Die Wickelfolie 25 wird z.B. durch Schweißen automatisch fixiert und danach wird das Bündel automatisch in Bündelabschnitte von ca. 200-300 mm Länge zugeschnitten. Die Wickelvorrichtung ist in einen verfahrbaren Wickeltisch integriert und kann zur Aufnahme des Bündels 20 z.B. von unten oder von der Seite an den Haspelbalken 7 herangefahren werden. Durch das Umwickeln mit Folie 25 erhält das Bündel 20 einen nahezu kreisrunden Querschnitt.

Die Spinngeschwindigkeit am Fadenaustritt aus der Spinnmaschine beträgt ca. 0,4 - 0,5 m/s. Der Haspelbalken 7 benötigt für eine Umdrehung im Mittel 14 Sekunden. Die Drehzahl des Haspelbalkens ist variabel, weil beim Anfahren zu Beginn des Wickelvorgangs zunächst die mit Hilfe des Tänzers 1 gespeicherte Fadenlänge aufgewickelt wird.

Eine Haspelmaschine produziert (bei der mittleren Filtergröße FX 60) durchschnittlich alle 9 Sekunden einen umwickelten und geschnittenen Bündelanschnitt.
Das Herausnehmen der geschnittenen Bündelabschnitte aus der Wickelvorrichtung und die Übergabe auf ein Förderband erfolgt mittels einer Saugerleiste. Hierzu bewegt sich der Wickeltisch vertikal zur Saugerleiste. Die Saugerleiste übergibt die Bündelabschnitte an ein Förderband. Mit Hilfe des Förderbands erfolgt der Abtransport aus der Maschine zur weiteren Verarbeitung.

Während ein Wickeldorn-Paar den von der Spinnanlage gelieferten Faserstrang aufhaspelt, kann der bereits fertig aufgehaspelte Strang auf dem anderen Haspelbalken in der gegenüberliegenden Position der Trommel weiter bearbeitet werden, d.h. mit Folie umwickelt, verschweißt und abgelängt werden. Es sind auch mehr als 2 Wickeldornpaare an einer Trommel denkbar, z.B. 4 Wickeldorn-Paare am Umfang der Trommel. Dann kann z.B. an einem Wickeldornpaar der Haspelvorgang erfolgen, während gleichzeitig an den drei anderen Wickeldorn-Paaren die weiteren Konfektionierungsschritte wie mit Folie umwickelt, verschweißt und abgelängt erfolgen. Vorzugsweise werden jedoch nur 2 Wickeldornpaare ausgeführt, so dass die Trommel jeweils um 180° weitergetaktet wird.

An jedem Wickeldorn 8 ist, wie bereits oben erwähnt, eine Klemmvorrichtung vorhanden, um den Anfang eines neuen Stranges am Wickeldorn festzuklemmen (Anfangsklemme). Hierzu verfährt ein schwenkbarer Klemmbügel gegen den Wickeldorn und drückt das Ende des Faserstrangs gegen den Wickeldorn. Der Anfangsklemmbügel wird beim Haspeln mit Fasern umwickelt. Weiter ist eine ebensolche Klemmvorrichtung vorhanden, um das Ende eines aufgehaspelten Stranges zu fixieren (Endklemme).

Die beiden Wickeldorne 8 sind dabei an Haspelköpfen montiert, die entlang der Haspelbalken 7 linear verschiebbar sind. Hierdurch ergibt sich eine Streck- und Staucheinrichtung für das aufgehaspelte Faserbündel 20, mit einer Normalstellung beim Haspeln, einer Streckstellung beim Einformen und einer Stauchposition, welche der endgültigen Länge der Faserbündel beim Umwickeln entspricht.

Während einer Drehung des Haspelbalkens 7 wird der Faserstrang 5 mit stark unterschiedlicher Geschwindigkeit über die letzte Umlenkrolle 3 gezogen, d.h. in den beiden Totpunktlagen der Haspel 7 kurzzeitig zum Stillstand kommend, dazwischen mit einem asymmetrischen Sinus-ähnlichen Verlauf bis zum Maximum ansteigend. Für einen Ausgleich dieser Geschwindigkeits-Schwankungen sorgt eine Tänzerrolle 1, die entsprechend auf ihrer Vertikalachse 4 oszilliert. Wenn die Amplitude der Tänzerrollen-Bewegung einen oberen oder unteren Grenzwert überschreitet, wird die Drehzahl des Haspelbalkens langsam nachgeregelt, bis sich wieder ein konstanter Beharrungswert eingestellt hat. Vorzugsweise liegt das Niveau der Tänzerrollen - Oszillation im oberen Bereich der Vertikalachse 4. Dadurch hat die Tänzerrolle noch ausreichend Kapazität als Pufferspeicher, wenn die Haspel 7 voll ist und der Fadenstrang 5 an die nächstfolgende freie Haspel übergeben wird.

Wenn die erforderliche Zugkraft auf die Tänzerrolle 1 nach dem Stand der Technik mit einem Gewicht G aufgebracht wird, ergibt sich zusammen mit dem elastischen Faserstrang ein Feder-Masse-System, dass unter ungünstigen Umständen zu Eigenfrequenz-Schwingungen neigt. Zweckmäßig ist daher eine möglichst massefreie Zugkraft-Vorrichtung, z.B. ein Drehmoment-gesteuerter Servomotor 16 in Verbindung mit einem leichtgängigen Zahnriemenantrieb. Die Tänzerrolle 1 kann in diesem Fall besonders leicht ausgeführt werden, so dass die Eigenfrequenz deutlich höher liegt und Resonanz-Schwingungen vermieden werden. Der Servomotor stellt ein konstantes Drehmoment zur Verfügung, das ggf. auch in Abhängigkeit vom Ausgangssignal einer zusätzlichen Fadenspannungs-Messeinrichtung nachgeregelt werden kann. Zusätzlich kann die Tänzerrolle 1 auch ohne Zugkraft-Regelung in feste Positionen fahren, wie es z.B. bei Start und Ende des Haspelvorganges zweckmäßig ist.

Das Aufhaspeln läuft dabei mit folgenden Schritten ab:

### Ausgangsstellung vor dem Start:

Der von der Produktionsanlage gelieferte Faserstrang 5 läuft über das Tänzerrollen-System (1,2,3) und wird dahinter - zwischen der letzten Umlenkrolle 3 und dem Haspelbalken 7 - von einem Saugrohr 13 ausgeschleust. Die Tänzerrolle 1 steht dabei in einer festen vertikalen Position, also ohne eine Zugkraft aufzubringen.

### Start des Haspelvorganges:

Der Übergabegreifer 14 erfasst oberhalb des Saugrohres 13 den Strang 5 und schneidet ihn unmittelbar- hinter der Klemmstelle durch. Gleichzeitig schaltet die Tänzerrolle 1 auf die Betriebsart "Zugkraft" um.

Das abgetrennte Ende des Strangs wird abgesaugt, während der Anfang des nachfolgenden Stranges vom Übergabegreifer zum nächstgelegenen Wickeldorn 8 der Haspel 7 geführt wird, wo es der Anfangsklemme übergeben wird.

Das während dieser Übergabe-Prozedur nachgelieferte Strang-Material wird zwischenzeitlich in der Tänzer-Vorrichtung gespeichert.

### Haspelung:

Der Haspelbalken beginnt zu drehen, zunächst mit höherer Drehzahl, als der normalen Produktionsgeschwindigkeit entspricht. Dabei wandert die oszillierende Tänzerrolle nach und nach aufwärts, bis die gewünschte Höhenlage erreicht ist. Die Haspeldrehzahl wird nun entsprechend der mittleren Stranggeschwindigkeit reduziert, geregelt durch die oben beschriebene Amplituden-Überwachung.

Wenn die gewünschte Zahl von Umdrehungen erreicht ist, stoppt der Haspelbalken an einer definierten Position, und das Ende des Stranges wird von der Endklemme fixiert. Das nachgelieferte Strang-Material wird nun wieder in der Tänzerrollen-Vorrichtung gespeichert.

### Übergabe:

Der Übergabe-Greifer 14 schneidet nun den stillstehenden Strang 5 durch, hält das freigewordene Ende fest, bis sich die Trommel 10 mit der vollen Haspel um 180° gedreht hat, und übergibt das Ende dann der Anfangsklemme der neuen leeren Haspel usw.

Während einer Störung oder bei Beendigung der Haspelarbeit kann der Übergabe-Greifer 14 den Strang wieder dem Saugrohr 13 übergeben.

Durch diesen Aufbau ergeben sich bei der erfindungsgemäßen Haspelmaschine folgende Vorteile:
a) Verringerung der Verschnitt-Verluste. Nach dem Stand der Technik liegen die Verschnittverluste bei unter 10 %, (bei der mittleren Filtergröße FX60 ca. 8 %) der produzierten Fasermenge. Es kann abgeschätzt werden, dass sich diese Verluste durch die erfindungsgemäße Maschine etwa halbieren lassen.
b) Leichte Zugänglichkeit bei der Realisierung von automatisierten Folien-Wickeleinrichtungen. Nach dem Stand der Technik ist der Raum für die Übergabe der Bündel in die Wickelvorrichtung stark eingeschränkt. Aufgrund des langen Bündels bei der neuen Maschine ist das Bündel leicht zugänglich. Dies begünstigt die Automatisierung.
c) Einfaches Handling durch die Möglichkeit, teil- oder vollautomatische Wickelvorrichtungen online mit der Spinnanlage zu betreiben. Die neue Wickelvorrichtung ist in die Haspelmaschine integriert. Dadurch fallen Übergabevorgänge nach dem Stand der Technik weg, die den Stofffluss unterbrechen, wie z.B. der Austausch der beladenen Haspelräder gegen leere Haspelräder und die manuelle Konfektionierung der Bündel mit Hilfe einer separaten Vorrichtung. Insgesamt wird durch die neue Maschine ein quasi-kontinuierlicher Betrieb ermöglicht.

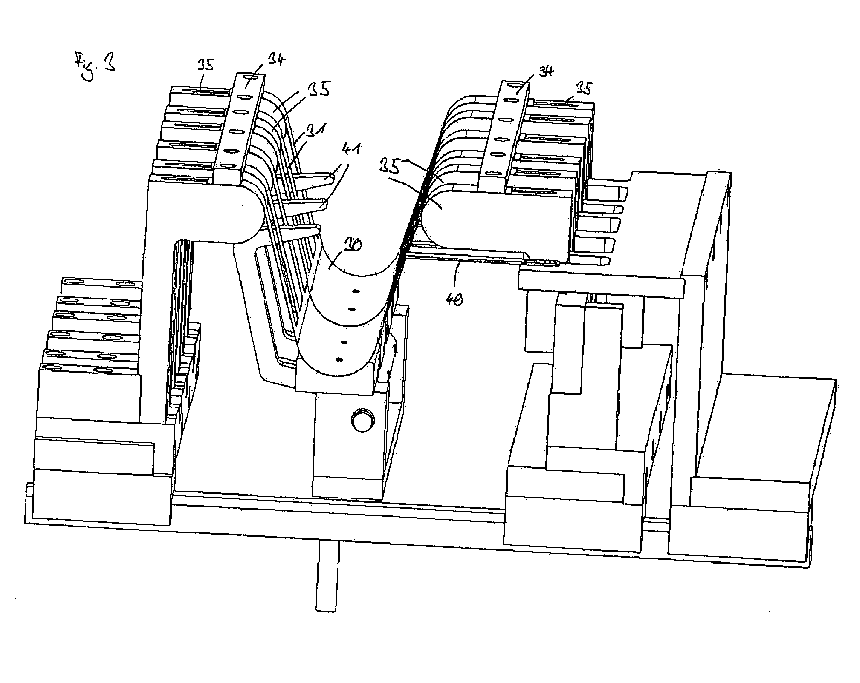

Weiterhin wird ein erstes Ausführungsbeispiel der Wickelmaschine anhand der Fig. 3 bis 7 beschrieben. Mit dieser ist es möglich, Fasern automatisiert in Folie zu wickeln. Mit der Automatisierung wird eine Verbesserung der geometrischen Eigenschaften der Faserbündel mit reproduzierbarer Qualität erreicht. Die Handhabung bei den Folgeprozessen kann somit verbessert und sichergestellt werden. Mit Hilfe der Wickelvorrichtung mit einem integriertem Wickelblech 30 kann ein Faserstrang 20 mit einer Folie 25 umwickelt und anschießend auf einen definierten Durchmesser komprimiert werden, um beispielsweise eine bestimmte Packungsdichte zu erzielen. In den nachfolgenden Prozessen kann nun diese Folie 25 fixiert (mittels Kleben, Schweißen etc.) und aus dem Strang 20 Bündel geschnitten werden.

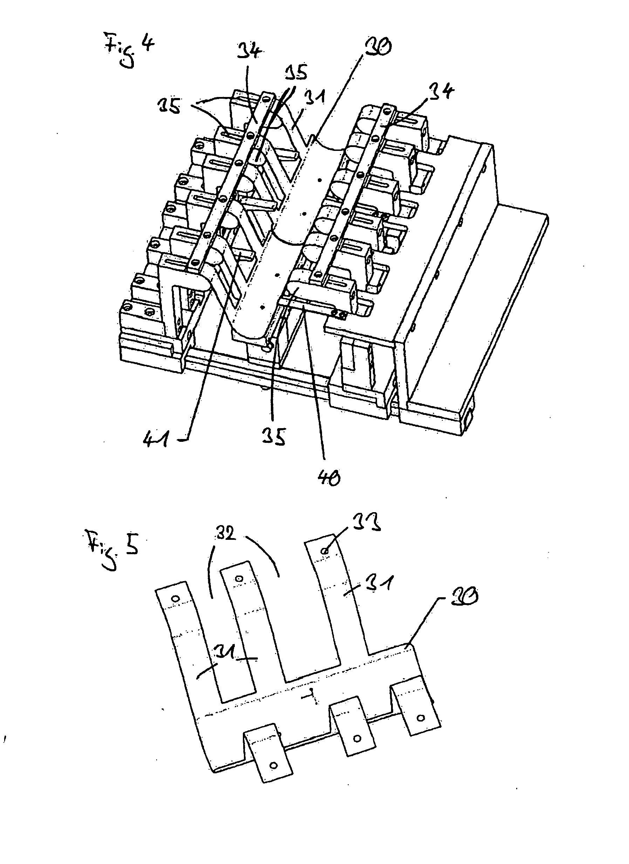

Die Ausführung beruht auf einer dünnen Edelstahlfolie 30, die deshalb nachfolgend als Wickelblech bezeichnet wird. Dieses in Fig. 5 im Detail gezeigte Wickelblech 30 weist dabei auf gegenüberliegenden Längsseiten Finger 31 und dazwischen liegende Aussparungen 32 auf, wobei die Finger auf der einen Längsseite den Aussparungen auf der gegenüberliegenden Längsseite gegenüberliegen. Das Wickelblech 30 ist dabei über die Finger 31 an Verbindungspunkten 33 mit Seitenelementen 35 verbunden, welche über einen Antrieb verschoben werden können.

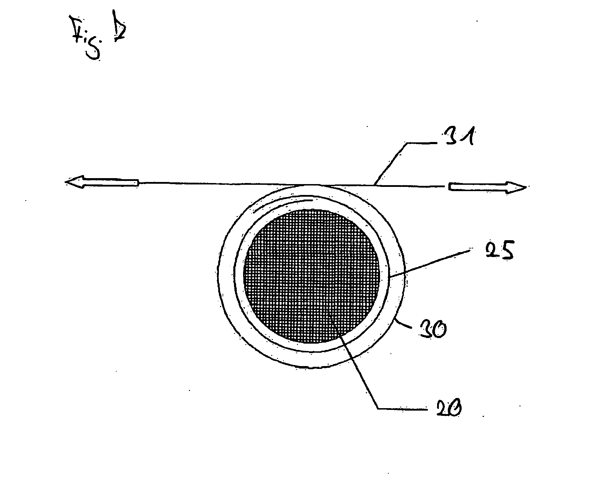

Die Wickelfolie (hier: blaue PE-Folie) wird in die von dem Wickelblech 30 gebildete Rinne gezogen und auf ganzer Länge mit zwei Umlegern 40, 41 so um den Faserstrang herum gelegt, dass sich die beiden Längskanten überlappen. Die Umleger können jeweils aus mehreren Zinken oder Fingern bestehen. Bei langen Umlegern kann vorteilhafterweise eine Vielzahl von Zinken oder Fingern vorhanden sein. Die Zinken oder Finger greifen durch die entsprechenden Aussparungen in der flexiblen Rinne und den Seitenelementen 35 hindurch und ermöglichen so das Herumlegen der Wickelfolie um den Faserstrang. Nun lässt sich die Rinne durch die Bewegung der Seitenelemente 35 zusammenfahren und das Wickelblech 30 umschlingt die Wickelfolie 25 mit Faserstrang 20 vollständig, wie in Fig. 7 gezeigt. Aufgrund der fingerförmigen Aussparungen 32 im Wickelblech 30 kann man die Vorrichtung so weit zusammenfahren lassen, bis der gewünschte End-Durchmesser oder eine bestimmte Packungsdichte erreicht ist. Der Bündeldurchmesser steht hierbei im direkten Verhältnis zu dem Umschlingungsumfang des Wickelblechs. Die Folie 25 (PE) muss während des Zusammenfahrens in der Lage sein, auf dem Wickelblech 30 zu gleiten. Der gemeinsame Reibungskoeffizient der gewählten Materialien muss so gewählt werden, dass ein Gleiten trotz sich erhöhender Reibung bei zunehmender Komprimierung möglich ist.

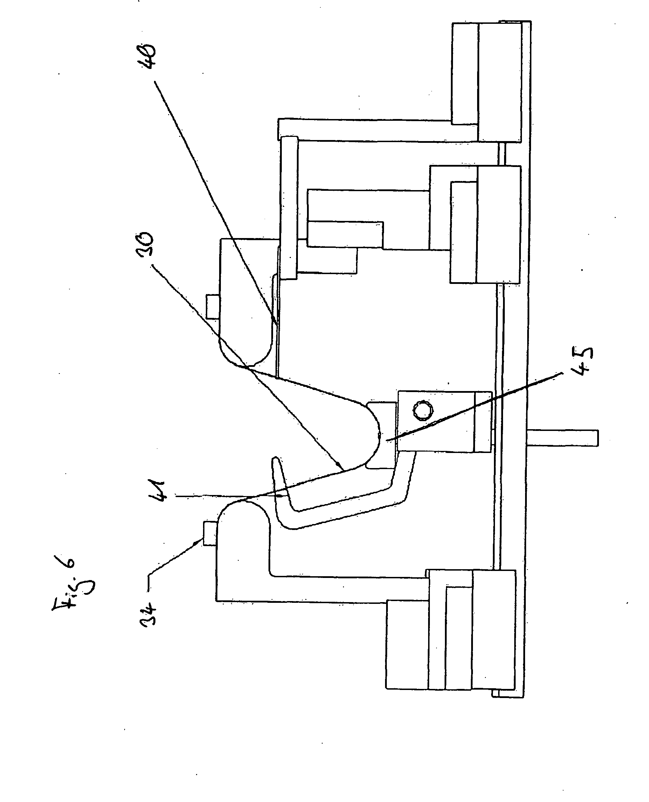

Wie in Fig. 6 weiterhin zu sehen, weist die Wickeleinrichtung zusätzlich eine geführte Stützschale 45 mit integrierter Vakuumansaugung zum Fixieren der Wickelfolie auf, welche ein unkontrolliertes Ausschwenken verhindert und Form gibt.

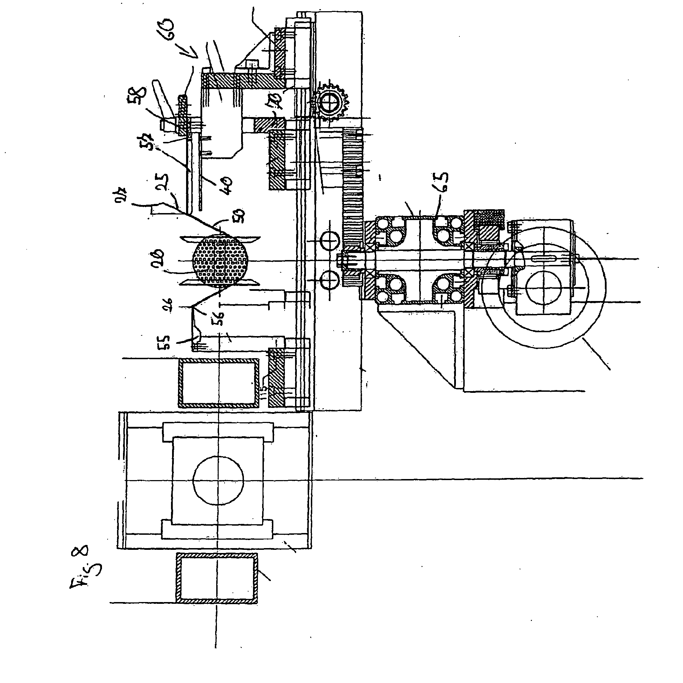

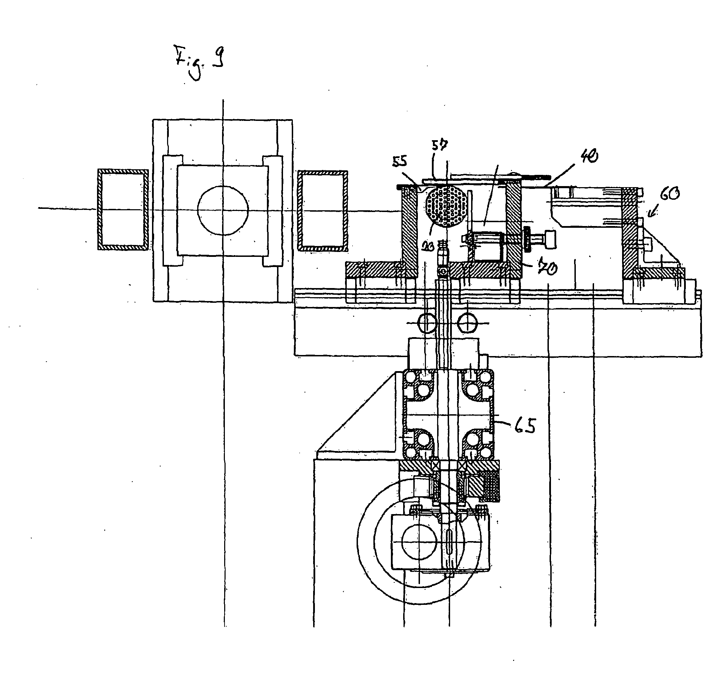

Ein zweites Ausführungsbeispiel der Wickelvorrichtung, welche in Fig. 8 bis 10 gezeigt ist, besteht aus einem dünnen Wickeltuch 50, das an zwei Leisten 55, 57 befestigt ist und zwischen diesen durchhängt. Beim Wickeltuch 50 handelt es sich um ein gummiertes Gewebetuch, das als Membrantuch bezeichnet wird. Die Leisten 55 bzw. 57 sind dabei über einen Antrieb verfahrbar, so dass die nun vom Wickeltuch gebildete Rinne zusammengefahren werden kann. Die Leiste 55 weist eine Messerkante 56 auf, an der das Wickeltuch z.B. durch Kleben befestigt ist. Die gegenüberliegende Leiste 57 weist eine Klemmvorrichtung 58 auf, über die das Wickeltuch befestigt ist und durch welche die Tiefe der Rinne eingestellt werden kann.

Zu Beginn des Wickels wird die Wickelfolie 25 (hier: blaue PE-Folie) auf das in der Vorrichtung durchhängende Membrantuch 50 abgelegt. Dabei wird die Wickelfolie so positioniert, dass eine Kante 26 an der Leiste 55 mit Messerkante 56 anliegt. Nach dem Einlegen des Faserstranges 20 wird die Vorrichtung zusammengefahren. Während des Zusammenfahrens legt der Umleger 40 das freie Ende 27 der Wickelfolie um den Faserstrang. Die Halteleisten 55, 57 an denen das Wickeltuch befestigt ist, müssen jetzt so verschoben werden, dass sich die freie Kante 27 der Wickelfolie unter die gegenüberliegende Kante 26 schiebt, welche weiter an der Messerkante 56 anliegt. Hierfür fährt die Halteleiste rechts (auf der Seite mit dem freien Ende 27 der Wickelfolie) dicht über die Seite mit der Messerkante hinweg.

Wenn dieser Punkt erreicht ist kann die Vorrichtung so weit zusammengefahren werden, bis der gewünschte End-Durchmesser oder eine bestimmte Packungsdichte erreicht ist. Der Bündeldurchmesser steht hierbei im direkten Zusammenhang mit dem eingestellten Durchhang und dem Verfahrweg des Wickeltuches 50. Entscheidend für das Funktionieren dieses Wickelprinzips ist die erforderliche Reibung zwischen Wickeltuch 50 und Wickelfolie 25.

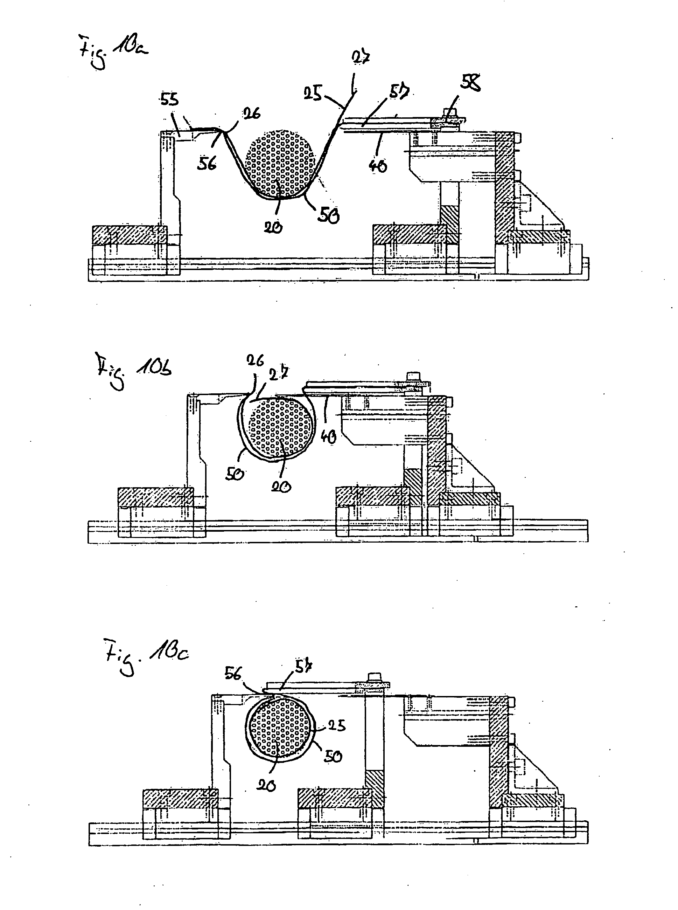

Wie in Fig. 10a bis 10c dargestellt, wird also die rechte Seite 27 der Wickelfolie aufgrund der bestehenden Reibung zwischen Wickeltuch und Wickelfolie zwischen den Faserstrang und das anderen Ende 26 der Wickelfolie 25 geschoben. Bedingung hierfür ist, dass der Reibungskoeffizient zwischen Wickeltuch 50 und Wickelfolie 25 stets größer ist als der mit zunehmendem Komprimierungsgrad größer werdende Reibungskoeffizient zwischen Wickelfolie und Wickelfolie.

Kennzeichnend für das "Wickeltuch"-Verfahren gemäß dem zweiten Ausführungsbeispiel gegenüber der "Wickelblech"-Ausführung gemäß dem ersten Ausführungsbeispiel ist insbesondere:
1) Das freie überstehende Ende 27 der Wickelfolie wird zwischen Faserstrang und dem feststehenden Ende 26, das an der Messerkante anliegt, eingefügt und gleitet bei der weiteren Komprimierung zwischen Fasern und der Innenseite der Wickelfolie. Beim Wickelblech hingegen gleitet das freie Ende der Wickelfolie zwischen dem Wickelblech und der Außenseite der Wickelfolie.
2) Demzufolge ist beim "Wickeltuch"-Verfahren eine hohe Reibung zwischen Folie und Tuch erforderlich, bei dem "Wickelblech"-Vertahren eine niedrige Reibung zwischen Folie und Blech.
3) Durch diese Anordnung des Wickeltuches kann das Bündel bzw. die Wickelfolie ganzflächig (über die ganze Länge und den ganzen Umfang) vom Wickeltuch umfasst werden, lediglich unterbrochen durch Aussparungen zum Fixieren der Wickelfolie durch Schweißen oder Kleben. Beim Wickelblech dagegen sind größere Aussparungen für das Überlappen der beiden Wickelblechseiten erforderlich.

Während im Stand der Technik die Faserstränge, die auf ein Rad aufgehaspelt wurden, von Hand gewickelt wurden, wobei Ungenauigkeiten entstehen, können mit Hilfe der Metallfolie oder dem Wickeltuch folgende Verbesserungen erzielt werden:
➢ Der gesamte Wickelprozess kann automatisiert werden.
➢ In einem automatisierten Wickelprozesses ist bei der Herstellung der Bündel eine sehr hohe Wiederholgenauigkeit bezüglich des Bündeldurchmessers erreichbar.
➢ Ein "schiefes" Wickeln, d.h. ein ungleichmäßiger Bündeldurchmesser über die Bündellänge, kann ausgeschlossen werden.
➢ Der gesamte Strang kann auf einmal mit der Folienbahn umwickelt werden.
➢ Die verbesserten geometrischen Eigenschaften des Bündels ermöglichen eine bessere Handhabung bei den Folgeprozessen, wie beispielsweise ein sichereres Einformen in das Filtergehäuse.
➢ Mit dem Wickelblech bzw. dem Wickeltuch lassen sich Bündel mit verschiedenen Durchmessern wickeln. Eine Anpassung an den jeweiligen Durchmesser lässt auf zwei Arten realisieren. Zum einen durch den Verfahrweg der Vorrichtung und zum anderen durch den Durchhang des Wickelblechs.

Im Gegensatz zur Verwendung eines Stahlblechs zum Umwickeln kann über die gezielt ansteuerbare Bewegung der Rinne über die Seitenelemente 35 bzw. die Leisten 55, 57 eine kontrollierte Komprimierung und ein gleichmäßigeres Endergebnis erreicht werden.

## Patentansprüche

1. Vorrichtung zum Aufhaspeln von Faserbündeln, insbesondere von Hohlfasermembranbündeln insbesondere für die Herstellung von Dialysefiltern,
mit einem um eine Hauptachse drehbaren Haspelträger (10) und mit mindestens zwei Haspeln (7), welche an dem Haspelträger (10) drehbar gelagert sind,
wobei die Drehachsen der Haspeln (7) senkrecht auf der Hauptachse des Haspelträgers (10) stehen, wobei der Abstand der Drehachsen der Haspeln (7) von der Hauptachse des Haspelträgers (10) kleiner ist als der Drehradius der Haspeln (7).

2. Vorrichtung zum Aufhaspeln von Faserbündeln nach Anspruch 1, wobei die mindestens zwei Haspeln (7) jeweils im wesentlichen aus einem Haspelbalken mit an de Enden des Haspelbalkens angeordneten Haspelköpfen mit Wickeldornen (8) bestehen.

3. Vorrichtung zum Aufhaspeln von Faserbündeln nach Anspruch 2, wobei der Abstand zwischen den Haspelköpfen mindestens die dreifache Länge der mit den Hohlfasermembranbündeln hergestellten Filterabschnitte von Dialysefiltern beträgt.

4. Vorrichtung zum Aufhaspeln von Faserbündeln nach Anspruch 2, wobei die Haspelköpfe Streck-/Staucheinrichtungen umfassen, mit welchen die Wickeldorne so bewegt werden können, dass das aufgehaspelte Faserbündel gestreckt oder gestaucht werden kann, und wobei vorteilhafterweise die Streck-/Staucheinrichtungen die Wickeldorne (8) entlang der Hauptausdehnung des Haspelbalkens linear verfahren.

5. Vorrichtung zum Aufhaspeln von Faserbündeln nach Anspruch 1, wobei zwei Haspeln (7) vorgesehen sind, die an gegenüberliegenden Seiten des Haspelträgers (10) angeordnet sind und deren Drehachsen insbesondere parallel oder koaxial angeordnet sind.

6. Vorrichtung zum Aufhaspeln von Faserbündeln nach Anspruch 1, mit jeweils separat angesteuerten Antrieben zur Drehung der Haspeln (7), wobei vorteilhafterweise die Antriebe zur Drehung der Haspeln (7) an dem Haspelträger (10) angeordnet sind.

7. Vorrichtung zum Aufhaspeln von Faserbündeln nach Anspruch 1, mit einem Antrieb zur Drehung des Haspelträgers (10) um einen festen Winkelbereich, insbesondere um 180°.

8. Vorrichtung zum Aufhaspeln von Faserbündeln nach Anspruch 1, wobei der Haspelträger (10) von einer Trommel gebildet wird.

9. Vorrichtung zum Aufhaspeln von Faserbündeln nach Anspruch 1, wobei die Haspeln (7) jeweils Greifer zum Festhalten des Anfangs sowie des Endes eines Faserstranges umfassen.

10. Vorrichtung zum Aufhaspeln von Faserbündeln nach Anspruch 1, mit einem oder mehreren der folgenden Elemente:
- einem Übergabegreifer (14) zur Aufnahme eines Faserstrangs von einer der Haspeln und zur Übergabe des Faserstrangs an die nächste Haspel,
- einer Schneidevorrichtung zum Abschneiden des Faserstrangs,
- einer Saugvorrichtung (13) zum Ansaugen von losen Enden des Faserstrangs,
- einer Vorrichtung zur Bereitstellung eines Faserstrangs, insbesondere einer Spinnmaschine.

11. Vorrichtung zum Aufhaspeln von Faserbündeln nach Anspruch 1, wobei die Drehachse des Haspelträgers (10) mit dessen Längsachse zusammenfällt, und wobei vorteilhafterweise die Drehachse des Haspelträgers horizontal angeordnet ist.

12. Verfahren zum Aufhaspeln von Faserbündeln, insbesondere von Hohlfasermembranbündeln insbesondere für die Herstellung von Dialysefiltern, auf einer Haspelanordnung mit einem um eine Hauptachse drehbaren Haspelträger (10) und mit mindestens zwei Haspeln (7), welche an dem Haspelträger drehbar gelagert sind, wobei die Drehachsen der Haspeln (7) senkrecht auf der Hauptachse des Haspelträgers (10) stehen, wobei der Abstand der Drehachsen der Haspeln (7) von der Hauptachse des Haspelträgers (10) kleiner ist als der Drehradius der Haspeln (7), welches folgende Schritte umfasst:
- Aufhaspeln eines Faserbündels auf einer ersten Haspel
- Drehen des Haspelträgers um die Hauptachse
- Weiterverarbeitung des Faserbündels auf der ersten Haspel und gleichzeitiges Aufhaspeln eines Faserbündels auf der nächsten Haspel.

13. Verfahren zum Aufhaspeln von Faserbündeln nach Anspruch 12, wobei der Faserstrang beim Aufhaspeln durch die Rotation eines Haspelbalkens um an dessen Enden angeordnete Wickeldorne (8) gewickelt wird, so dass sich das aufgehaspelte Faserbündel entlang des Haspelbalkens erstreckt.

14. Verfahren zum Aufhaspeln von Faserbündeln nach Anspruch 13, wobei die Länge des Faserbündels mindestens das dreifache der Länge der mit den Hohlfasermembranbündeln hergestellten Filterabschnitte von Dialysefiltern beträgt.

15. Verfahren zum Aufhaspeln von Faserbündeln nach Anspruch 12, wobei durch das Drehen des Haspelträgers (10) um die Hauptachse die nächste Haspel (7) die vorher von der ersten Haspel (7) eingenommene Position einnimmt.

16. Verfahren zum Aufhaspeln von Faserbündeln nach Anspruch 12, wobei die Drehachse des Haspelträgers (10) mit dessen Längsachse zusammenfällt und die Haspeln (7) jeweils im wesentlichen aus einem Haspelbalken mit an den Enden des Haspelbalkens angeordneten Haspelköpfen mit Wickeldornen (8) bestehen, wobei vor dem Drehen des Haspelträgers (10) die Haspelbalken in eine mit dem Haspelträger im wesentlichen parallele Position gebracht werden.

17. Verfahren zum Aufhaspeln von Faserbündeln nach Anspruch 12, wobei der Haspelbalken während des Weiterverarbeeunasschritts in seiner im wesentlichen parallelen Position zum Haspelträger (10) verbleibt.

18. Verfahren zum Aufhaspeln von Faserbündeln nach Anspruch 12, wobei der Faserstrang kontinuierlich bereitgestellt wird, insbesondere durch kontinuierliches Spinnen des Faserstrangs,
und der Faserstrang in einer Speichervorrichtung zwischengespeic wird, während durch Drehen des Haspelträgers (10) die nächste Haspel (7) bereitgestellt wird.

19. Verfahren zum Aufhaspeln von Faserbündeln nach Anspruch 12,
wobei der Anfang des Faserstrangs an der Haspel festgeklemmt wird, daraufhin das Aufhaspeln startet und nach einer festgelegten Anzahl von Umdrehungen endet, woraufhin auch das Ende des Faserstrangs an der Haspel festgeklemmt wird und/oder
wobei nach dem Aufhaspeln des Faserbündels auf einer ersten Haspel der Faserstrang von einem Übergabegreifer (14) erfasst, geschnitten und nach Drehen des Haspelträgers an die nächste Haspel übergeben wird und/oder wobei lose Enden des Faserstrangs über eine Saugvorrichtung (13) angesaugt werden.

20. Verfahren zum Aufhaspeln von Faserbündeln nach Anspruch 13, wobei zur Weiterverarbeitung des Faserbündels die Zugspannung im Faserbündel durch Verschieben der Wickeldorne (8) vermindert wird.

## Claims

1. An apparatus for the reeling up of fiber bundles, in particular of hollow fiber membrane bundles in particular for the manufacture of dialysis filters, comprising a reel carrier (10) rotatable about a main axis; and
comprising at least two reels (7) which are rotatably supported at the reel carrier (10),
wherein the axes of rotation of the reels (7) stand perpendicular on the main axis of the reel carrier (10), wherein the spacing of the axes of rotation of the reels (7) from the main axis of the reel carrier (10) is smaller than the radius of rotation of the reels (7).

2. An apparatus for the reeling up of fiber bundles in accordance with claim 1, wherein the at least two reels (7) each substantially comprise one reel bar with reel heads arranged at the ends of the reel bar having winding mandrels (8).

3. An apparatus for the reeling up of fiber bundles in accordance with claim 2, wherein the spacing between the reel heads amounts to at least three times the length of the filter portions of dialysis filters manufactured with the hollow fiber membrane bundles.

4. An apparatus for the reeling up of fiber bundles in accordance with claim 2, wherein the reel heads comprise stretching/compressing devices with which the winding mandrels can be moved such that the reeled up fiber bundle can be stretched or compressed and wherein the stretching/compressing devices advantageously move the winding mandrels (8) along the main extent of the reel bar in a linear fashion.

5. An apparatus for the reeling up of fiber bundles in accordance with claim 1, wherein two reels (7) are provided which are arranged at oppositely disposed sides of the reel carrier (10) and whose axes of rotation are in particular arranged in parallel or coaxially.

6. An apparatus for the reeling up of fiber bundles in accordance with claim 1, each having separately controlled drives for the rotation of the reels (7), wherein the drives for the rotation of the reels (7) are advantageously arranged at the reel carrier (10).

7. An apparatus for the reeling up of fiber bundles in accordance with claim 1, comprising a drive for the rotation of the reel carrier (10) by a fixed angular range, in particular by 180°.

8. An apparatus for the reeling up of fiber bundles in accordance with claim 1, wherein the reel carrier (10) is formed by a drum.

9. An apparatus for the reeling up of fiber bundles in accordance with claim 1, wherein the reels (7) each comprise grips for the holding tight of the start and the end of a fiber strand.

10. An apparatus for the reeling up of fiber bundles in accordance with claim 1, comprising one or more of the following elements:
- a transfer grip (14) for the receiving of a fiber strand from one of the reels and for the transfer of the fiber strand to the next reel,
- a cutting apparatus for the cutting off of the fiber strand,
- a suction apparatus (13) for the suction of loose ends of the fiber strand,
- an apparatus for the provision of a fiber strand, in particular a spinning machine.

11. An apparatus for the reeling up of fiber bundles in accordance with claim 1, wherein the axis of rotation of the reel carrier (10) coincides with its longitudinal axis and wherein the axis of rotation of the reel carrier is advantageously arranged horizontally.

12. A method for the reeling up of fiber bundles, in particular of hollow fiber membrane bundles, in particular for the manufacture of dialysis filters, on a reel arrangement comprising a reel carrier (10) rotatable around a main axis and comprising at least two reels (7) which are rotatably supported on the reel carrier, wherein the axes of rotation of the reels (7) stand perpendicular on the main axis of the reel carrier (10), wherein the spacing of the axes of rotation of the reels (7) from the main axis of the reel carrier (10) is smaller than the radius of rotation of the reels (7), said method comprising the following steps:
- reeling up of a fiber bundle on a first reel
- rotation of the reel carrier around the main axis
- further processing of the fiber bundle on the first reel and simultaneous reeling up of a fiber bundle on the next reel.

13. A method for the reeling up of fiber bundles in accordance with claim 12, wherein the fiber strand, on the reeling up by the rotation of a reel bar, is wrapped around winding mandrels (8) arranged at its ends so that the reeled on fiber bundle extends along the reel bar.

14. A method for the reeling up of fiber bundles in accordance with claim 13, wherein the length of the fiber bundle amounts to at least three times the length of the filter portions of dialysis filters manufactured with the hollow fiber membrane bundles.

15. A method for the reeling up of fiber bundles in accordance with claim 12, wherein the next reel (7) adopts the position previously adopted by the first reel (7) by the rotation of the reel carrier (10) around the main axis.

16. A method for the reeling up of fiber bundles in accordance with claim 12, wherein the axis of rotation of the reel carrier (10) coincides with its longitudinal axis and the reels (7) each substantially comprise a reel bar with reel heads arranged at the ends of the reel bar having winding mandrels (8), with the reel bars being brought into a position substantially parallel with the reel carrier before the rotation of the reel carrier (10).

17. A method for the reeling up of fiber bundles in accordance with claim 12, wherein the reel bar remains in its position substantially parallel to the reel carrier (10) during the further processing step.

18. A method for the reeling up of fiber bundles in accordance with claim 12,
wherein
the fiber strand is provided continuously, in particular by continuous spinning of the fiber strand,
and the fiber strand is intermediately stored in a storage apparatus, while the next reel (7) is provided by rotation of the reel carrier (10).

19. A method for the reeling up of fiber bundles in accordance with claim 12, wherein the start of the fiber strand is clamped to the reel, whereupon the reeling up starts and ends after a fixed number of rotations, whereupon the end of the fiber strand is also clamped to the reel; and/or
wherein after the reeling up of the fiber bundle on a first reel, the fiber strand is taken up by a transfer grip (14), is cut and is transferred to the next reel after rotation of the reel carrier; and/or
wherein loose ends of the fiber strand are sucked up via a suction apparatus (13).

20. A method for the reeling up of fiber bundles in accordance with claim 13, wherein the pulling tension in the fiber bundle is reduced by displacement of the winding mandrels (8) for the further processing of the fiber bundle.

## Revendications

1. Dispositif destiné à dérouler des faisceaux de fibres, notamment des faisceaux de membranes de fibres creuses, notamment pour la fabrication de filtres à dialyse, avec un support de treuils (10) tournant autour d'un axe principal et avec au moins deux treuils (7), qui sont montés sur paliers tournants sur le support de treuils (10),
les axes de rotation des treuils (7) étant en position verticale sur l'axe principal du support de treuils (10), l'écart des axes de rotation des treuils (7) par rapport à l'axe principal du support de treuils (10) étant inférieur au rayon de rotation des treuils (7).

2. Dispositif destiné à dérouler des faisceaux de fibres selon la revendication 1, au moins les deux treuils (7) se composant respectivement et pour l'essentiel d'une barre de treuil avec des têtes de treuils disposées aux extrémités de la barre de treuil avec des mandrins de bobinage (8).

3. Dispositif destiné à dérouler des faisceaux de fibres selon la revendication 2, l'écart entre les têtes de treuils s'élevant au moins au triple de la longueur des sections de filtrage fabriquées avec les faisceaux de membranes de fibres creuses des filtres de dialyse.

4. Dispositif destiné à dérouler des faisceaux de fibres selon la revendication 2, les têtes de treuils comprenant des dispositifs d'étirement / de compression avec lesquels les mandrins de bobinage peuvent être déplacés de telle manière que le faisceau de fibres déroulé peut être étiré ou comprimé, et avantageusement, les dispositifs d'étirement / de compression déplaçant linéairement les mandrins de bobinage (8) le long de l'extension principale de la barre de treuil.

5. Dispositif destiné à dérouler des faisceaux de fibres selon la revendication 1, deux treuils (7) étant prévus, qui sont disposés sur les côtés face à face du support de treuils (10) et dont les axes de rotation sont disposés notamment parallèlement ou coaxialement.

6. Dispositif destiné à dérouler des faisceaux de fibres selon la revendication 1, avec des entraînements respectivement actionnés séparément pour la rotation des treuils (7), les entraînements étant disposés avantageusement sur le support de treuils (10) pour la rotation des treuils (7).

7. Dispositif destiné à dérouler des faisceaux de fibres selon la revendication 1, avec un entraînement pour la rotation du support de treuils (10) autour d'une plage angulaire fixe, notamment de 180°.

8. Dispositif destiné à dérouler des faisceaux de fibres selon la revendication 1, le support de treuils (10) étant constitué par un tambour.

9. Dispositif destiné à dérouler des faisceaux de fibres selon la revendication 1, les treuils (7) comprenant respectivement des pinces pour maintenir le départ et l'extrémité d'une corde de fibres.

10. Dispositif destiné à dérouler des faisceaux de fibres selon la revendication 1, avec un ou plusieurs des éléments suivants :
- une pince de transfert (14) destinée à la réception d'une corde de fibres de l'un des treuils et au transfert de la corde de fibres au treuil suivant,
- un dispositif coupeur destiné à découper la corde de fibres,
- un dispositif d'aspiration (13) pour aspirer les extrémités flottantes de la corde de fibres,
- un dispositif destiné à la mise à disposition d'une corde de fibres, notamment d'une fileuse.

11. Dispositif destiné à dérouler des faisceaux de fibres selon la revendication 1, l'axe de rotation du support de treuils (10) coïncidant avec l'axe longitudinal de ce dernier et l'axe de rotation du support de treuils étant disposé avantageusement à l'horizontale.

12. Procédé destiné à dérouler des faisceaux de fibres, notamment des faisceaux de membranes de fibres creuses, notamment pour la fabrication de filtres à dialyse, avec un support de treuils (10) tournant autour d'un axe principal et avec au moins deux treuils (7), qui sont montés sur paliers tournants sur le support de treuils, les axes de rotation des treuils (7) étant en position verticale sur l'axe principal du support de treuils (10), l'écart des axes de rotation des treuils (7) par rapport à l'axe principal du support de treuils (10) étant inférieur au rayon de rotation des treuils (7), qui comprend les étapes suivantes :
- Déroulement d'un faisceau de fibres sur un premier treuil
- Rotation du support de treuils autour de l'axe principal
- Traitement ultérieur du faisceau de fibres sur le premier treuil et déroulement simultané d'un faisceau de fibres sur le treuil suivant.

13. Procédé destiné à dérouler des faisceaux de fibres selon la revendication 12, la corde de fibres étant enroulée lors du déroulement par la rotation d'une barre de treuil autour de mandrins de bobinage (8) disposés aux extrémités de celle-ci de sorte que le faisceau de fibres déroulé s'étire le long de la barre de treuil.

14. Procédé destiné à dérouler des faisceaux de fibres selon la revendication 13, la longueur du faisceau de fibres s'élevant au moins au triple de la longueur des sections de filtrage fabriquées avec les faisceaux de membranes de fibres creuses des filtres de dialyse.

15. Procédé destiné à dérouler des faisceaux de fibres selon la revendication 12, le treuil suivant (7) adoptant par la rotation du support de treuils (10) autour de l'axe principal la position prise auparavant par le premier treuil (7).

16. Procédé destiné à dérouler des faisceaux de fibres selon la revendication 12, l'axe de rotation du support de treuils (10) coïncidant avec l'axe longitudinal de ce dernier et les treuils (7) se composant respectivement et pour l'essentiel d'une barre de treuil avec des têtes de treuils disposées aux extrémités de la barre de treuil avec des mandrins de bobinage (8), les barres de treuils étant amenées avant la rotation du support de treuils (10) dans une position pour l'essentiel parallèle au support de treuils.

17. Procédé destiné à dérouler des faisceaux de fibres selon la revendication 12, la barre de treuils demeurant dans sa position pour l'essentiel parallèle au support de treuils (10) pendant l'étape de traitement ultérieur.

18. Procédé destiné à dérouler des faisceaux de fibres selon la revendication 12, la corde de fibres étant mise à disposition en continu, notamment par filage continu de la corde de fibres,
et la corde de fibres étant stockée provisoirement dans un dispositif de stockage, pendant que le treuil suivant (7) est mis à disposition par la rotation du support de treuils (10).

19. Procédé destiné à dérouler des faisceaux de fibres selon la revendication 12, le départ de la corde de fibres étant serré sur le treuil, suite à quoi le déroulement démarre et se termine après un nombre défini de tours, suite à quoi l'extrémité de la corde de fibres est serrée sur le treuil et/ou la corde de fibres étant saisie sur un premier treuil par une pince de transfert (14) après le déroulement du faisceau de fibres, découpée et après la rotation du support de treuils, transférée au treuil suivant et/ou des extrémités flottantes de la corde de fibres étant aspirées par l'intermédiaire d'un dispositif d'aspiration (13).

20. Procédé destiné à dérouler des faisceaux de fibres selon la revendication 13, l'effort de tension dans le faisceau de fibres étant réduit par décalage des mandrins de bobinage (8) pour le traitement ultérieur du faisceau de fibres.
